# FASCICULE DE BREVET EUROPEEN

(11) **EP 1 433 343 B1**
(45) Date de publication et mention de la délivrance du brevet: **20.04.2005**
(21) Numéro de dépôt: 02774916.7
(22) Date de dépôt: 09.09.2002
(51) Int. Cl.: H04Q 7/32

(54) **MODULE DE RADIOCOMMUNICATION EXECUTANT UN LOGICIEL PRINCIPAL DONT LES COUCHES BASSES SONT OUVERTES A UN LOGICIEL CLIENT EGALEMENT EXECUTE PAR LE MODULE**
FUNKKOMMUNIKATIONSMODUL, DAS EIN HAUPTSOFTWAREPROGRAMM AUSFÜHRT, DESSEN NIEDRIGE SCHICHTEN EINEM CLIENT-SOFTWAREPROGRAMM, DAS EBENFALLS DURCH DAS MODUL AUSGEFÜHRT WIRD, OFFEN SIND
RADIOCOMMUNICATION MODULE THAT RUNS A MAIN SOFTWARE PROGRAM, THE LOW-LEVEL LAYERS OF WHICH ARE OPEN TO A CLIENT SOFTWARE PROGRAM WHICH IS ALSO RUN BY THE MODULE

(30) Priorité: 02.10.2001 FR 0112692
(43) Date de publication de la demande: 30.06.2004
(73) Titulaire: Wavecom, 92442 Issy les Moulineaux (FR)
(72) Inventeur: MONTES, Jacques, F-94130 Nogent sur Marne (FR)
(74) Mandataire: Vidon, Patrice
(86) Numéro de dépôt international: PCT/FR2002/003058
(87) Numéro de publication internationale: WO 2003/030572

(56) Documents cités:
- WO-A-99/63767
- FR-A- 2 805 912
- LIOU A-H A ET AL: "The design of PDA application schemes for wireless communication services" PERSONAL, INDOOR AND MOBILE RADIO COMMUNICATIONS, 1996. PIMRC'96., SEVENTH IEEE INTERNATIONAL SYMPOSIUM ON TAIPEI, TAIWAN 15-18 OCT. 1996, NEW YORK, NY, USA,IEEE, US, 15 octobre 1996 (1996-10-15), pages 718-722, XP010209265 ISBN: 0-7803-3692-5

## Description

Le domaine de l'invention est celui des systèmes de radiocommunication notamment, mais non exclusivement, selon le standard GSM (pour "Global System for Mobile communications" en anglais), DCS 1800 (pour "Digital Cellular System 1800 MHz" en anglais), PCS 1900 (pour "Personal Communication System" en anglais), GPRS (pour "General Packet Radio service"), ou encore UMTS (pour "Universal Mobile Telecommunication System" en anglais).

Plus précisément, l'invention concerne un module de radiocommunication. On rappelle que le module de radiocommunication est un élément essentiel d'un radiotéléphone.

Habituellement (première application), le module de radiocommunication est compris dans un terminal (ou ME, pour "Mobile Equipment" en anglais) qui coopère avec une carte SIM (pour "Subscriber Identity Module" en anglais, ou module d'identification d'abonné).

D'autres applications ont d'ores et déjà été envisagées pour le module de radiocommunication précité.

Il a notamment été proposé (seconde application) d'intégrer le module de radiocommunication dans des dispositifs autres que des terminaux de radiocommunication, mais nécessitant néanmoins une fonctionnalité de communication sans fil. A titre d'exemple, on peut citer des dispositifs de télémétrie (relevés de compteur), des dispositifs d'alarme ou encore des dispositifs lecteur de cartes bancaires.

Il a également été proposé (troisième application) de fournir le module de radiocommunication sous forme indépendante : il est alors qualifié de modem. Un tel modem ne comprend aucun élément matériel (écran, clavier, haut-parleur, ...) d'interface homme/machine. Il est destiné à coopérer avec un équipement tiers (supportant un logiciel client), qui lui possède des éléments matériels d'interface homme/machine. L'équipement tiers peut notamment, mais non exclusivement, être un micro-ordinateur.

Typiquement, le module de radiocommunication héberge et exécute un logiciel principal comprenant :
- une application de gestion du système d'exploitation, aussi appelée bloc "OS" (pour "Operating System" en anglais), qui gère les aspects système tels que le gestionnaire de tâches, le gestionnaire de mémoire, le gestionnaire de temporisation, etc. ;
- une application de gestion des radiocommunications, aussi appelée bloc "couche 3 GSM", qui gère les aspects réseau tels que la gestion des appels sortants et entrants, la gestion des réceptions et envois de messages courts texte, etc. On notera que le bloc "couche 3 GSM" peut ne pas respecter la totalité des recommandations GSM pour les couches 3. Il peut également être conforme à un autre standard (DCS 1800, PCS 1900, GPRS, UMTS, ... ) ;
- une application de gestion de périphériques pouvant être connectés au module de radiocommunication, aussi appelée bloc "HWL" (pour "HardWare Layer" en anglais). Par périphériques, on entend notamment, mais non exclusivement, un écran, un clavier, un microphone, un haut-parleur, un bus série, un élément d'entrées/sorties GPIO ("General Purpose Inputs/outputs"), une batterie, un lecteur de SIM, etc ;
- une application propriétaire, faisant appel aux trois blocs "OS", "couche 3 GSM" et "HWL" précités afin d'offrir à l'utilisateur une pluralité de fonctionnalités propres à un dispositif intégrant le module de radiocommunication. On rappelle que ce dispositif est par exemple un radiotéléphone (première application précitée), un "autre dispositif" (seconde application précitée) ou encore un modem (troisième application précitée).

Actuellement, le logiciel principal est un logiciel propriétaire, développé par le fabriquant du module de radiocommunication. Il comprend un fichier binaire contenant notamment l'application propriétaire ainsi que les blocs "OS", "couche 3 GSM" et "HWL" précités. De façon classique, ce fichier binaire résulte d'une compilation d'une pluralité de fichiers sources (par exemple en langage "C"), puis d'une édition de lien entre les fichiers sources compilés (aussi appelés fichiers objets).

La technique actuelle, selon laquelle le logiciel principal est un logiciel propriétaire, présente plusieurs inconvénients.

Tout d'abord, elle ne permet pas à un client de développer lui-même sa propre application. En effet, le client doit impérativement faire développer son application par le constructeur du module de radiocommunication (pour obtenir l'application propriétaire précitée).

Un autre inconvénient de la technique actuelle est que si le client souhaite apporter des modifications à l'application propriétaire, il doit à nouveau impérativement passer par le constructeur du module de radiocommunication. Le client n'est donc pas maître des évolutions qu'il souhaite pour son application et doit en permanence compter sur les ressources du constructeur de module de radiocommunication.

L'invention a notamment pour objectif de pallier ces différents inconvénients de l'état de la technique.

Plus précisément, l'un des objectifs de la présente invention est de fournir une technique permettant à un client de développer sa propre application, puis de l'embarquer et la faire exécuter par un module de radiocommunication. Cette application, dite "application cliente", doit pouvoir être développée par le client lui-même, indépendamment du constructeur du module de radiocommunication. Elle doit remplacer l'"application propriétaire" précitée, au sein du module de radiocommunication.

L'invention a également pour objectif de permettre au client de développer une application cliente "distribuée", comprenant une pluralité d'applications "de tâche" effectuant plusieurs tâches temps réel, entre lesquelles le client peut définir des priorités.

Un autre objectif de l'invention est de fournir une architecture logicielle, au sein du module de radiocommunication, qui permette de supporter une nouvelle technique de pilotage du module de radiocommunication, qui soit simple et peu coûteuse (en terme de matériel et de consommation énergétique).

On rappelle que la technique actuelle de pilotage d'un module de radiocommunication par un équipement tiers présente plusieurs inconvénients. Tout d'abord, elle nécessite un double jeu de ressources (processeur et mémoire). En effet, le module de radiocommunication comprend un processeur et une mémoire (premier jeu de ressources) et l'équipement tiers dispose également d'un processeur et d'une mémoire (second jeu de ressources). La technique actuelle précitée est donc coûteuse en terme de matériel et de consommation énergétique. Un autre inconvénient de la technique actuelle précitée est que le module de radiocommunication subit entièrement le pilotage effectué par l'équipement tiers. En effet, le logiciel client de pilotage, hébergé et exécuté par l'équipement tiers, est le "maître", tandis que le logiciel principal, hébergé et exécuté par le module de radiocommunication, est l'"esclave".

Selon un autre objectif de l'invention, la nouvelle technique de pilotage du module de radiocommunication, supportée par la nouvelle architecture logicielle selon l'invention, permet au module de radiocommunication, lorsque le pilotage est effectué par un équipement tiers, de pouvoir superviser (y inclus agir sur) le déroulement de ce pilotage. En d'autres termes, on souhaite que le module de radiocommunication ne joue pas uniquement un rôle d'esclave.

Encore un autre objectif de l'invention est, dans le contexte de la nouvelle technique précitée de pilotage d'un module de radiocommunication, de faciliter la tâche du client dans le processus de développement de sa propre application cliente.

L'invention a également pour objectif de proposer une solution simple et efficace aux problèmes de dialogue entre sous-applications clientes (principale et secondaire) qui résultent de la mise en oeuvre d'un mode de réalisation particulier de la présente invention dans lequel :
- l'application cliente est "distribuée" au sens précité et comprend :
   * une première application "de tâche", réalisant une première tâche temps réel d'exécution de commandes de pilotage (par exemple des commandes AT),
   * une seconde application "de tâche", réalisant une seconde tâche temps réel telle que la seconde application "de tâche" joue le rôle d'une application cliente de pilotage et/ou le rôle d'une application cliente de supervision ;
- la seconde application "de tâche" comprend elle-même :
   * une sous-application cliente principale,
   * au moins une sous-application cliente secondaire.

Ces différents objectifs, ainsi que d'autres qui apparaîtront par la suite, sont atteints selon l'invention à l'aide d'un module de radiocommunication, du type hébergeant et exécutant un logiciel principal comprenant : une application de gestion du système d'exploitation (OS), une application de gestion des radiocommunications (couche 3 GSM) et une application de gestion de périphériques pouvant être connectés au module de radiocommunication (HWL). Selon l'invention, chacune desdites applications comprises dans le logiciel principal est associée à un jeu de fonctions d'exécution de niveau 1. Ledit module de radiocommunication héberge et exécute en outre au moins un logiciel client comprenant au moins une application cliente, associée à un jeu de fonctions sources de niveau 1. Ledit logiciel principal et/ou ledit logiciel client comprend(nnent) une application d'interface de niveau 1, permettant l'interfaçage des fonctions sources de niveau 1, associées à ladite application cliente, avec les fonctions d'exécution de niveau 1, associées à ladite application de gestion du système d'exploitation et à au moins une desdites applications de gestion des radiocommunications et de gestion de périphériques. De cette façon, on ouvre à ladite au moins une application cliente, l'accès à au moins certaines des fonctionnalités du logiciel principal.

Le principe général de l'invention consiste donc à utiliser deux logiciels (principal et client) pouvant dialoguer entre eux, et à héberger sur le logiciel client embarqué (au moins) une application cliente. Ainsi, le logiciel principal ne comprend plus d'application principale propriétaire. En d'autres termes, l'accès à des couches basses du module de radiocommunication (blocs "OS", "couche 3 GSM" et "HWL" précités), développées par le fabricant du module de radiocommunication, est ouvert à des applications clientes, développées par des clients. L'ensemble de ces couches basses est parfois aussi appelé "Open-Stack" dans la suite de la description.

La nouvelle technique selon l'invention peut être vue comme une plate-forme logicielle, permettant aux clients de développer leurs propres applications clientes et de les télécharger dans les modules de radiocommunication.

Les clients peuvent développer, indépendamment du constructeur du module de radiocommunication, leurs propres applications puis les embarquer et les faire exécuter par les modules de radiocommunication. De même, les clients peuvent modifier ou faire évoluer leurs applications clientes sans que cela nécessite l'intervention du fabricant du module de radiocommunication.

Ainsi, on peut distinguer selon la présente invention les trois types d'interfaçage suivants, via l'application d'interface de niveau 1 :
- interfaçage de la ou des application(s) cliente(s) avec les blocs "OS" et "couche 3 GSM" ;
- interfaçage de la ou des application(s) cliente(s) avec les blocs "OS" et "HWL" ;
- interfaçage de la ou des application(s) cliente(s) avec les blocs "OS", "couche 3 GSM" et "HWL".

On notera que la ou les applications clientes peuvent être contenues dans le logiciel client sous plusieurs formes :
- soit il y a une unique application cliente, contenue dans le logiciel client sous la forme d'un fichier binaire. L'application d'interface de niveau 1 est dans ce cas contenue soit dans ce fichier binaire (ce qui suppose que le fichier objet contenant l'application cliente ait fait l'objet d'une édition de lien avec le fichier objet contenant l'application d'interface de niveau 1), soit dans un autre fichier binaire ;
- soit il y a plusieurs applications clientes, contenues dans le logiciel client sous la forme d'un même fichier binaire. L'application d'interface de niveau 1 est dans ce cas contenue soit dans ce fichier binaire (ce qui suppose que les fichiers objet contenant les applications clientes aient fait l'objet d'une édition de lien avec le fichier objet contenant l'application d'interface de niveau 1), soit dans un autre fichier binaire ;
- soit il y a plusieurs applications clientes, contenues dans le logiciel client sous la forme de plusieurs fichiers binaires (chaque fichier binaire contenant une ou plusieurs applications clientes). L'application d'interface de niveau 1 est dans ce cas contenue soit dans l'un de ces fichiers binaires (ce qui suppose, pour le fichier binaire concerné, que le ou les fichiers objet contenant la ou les applications clientes aient fait l'objet d'une édition de lien avec le fichier objet contenant l'application d'interface de niveau 1), soit dans un autre fichier binaire.

On notera que l'expression "de niveau 1" est utilisée pour qualifier des entités impliquées dans des relations entre application(s) cliente(s) et application(s) comprise(s) dans le logiciel principal. Ces "entités de niveau 1" sont notamment les fonctions d'exécution associées aux applications comprises dans le logiciel principal, les fonctions source associées à la ou aux application(s) cliente(s), ou encore l'application d'interface entre application(s) cliente(s) et application(s) comprise(s) dans le logiciel principal.

On utilise par la suite une expression distincte, à savoir "de niveau 2", pour qualifier des entités impliquées dans des relations entre deux applications clientes, dans le cadre d'un mode de réalisation particulier de l'invention relatif au pilotage du module de radiocommunication. Ces "entités de niveau 2" sont notamment les fonctions d'exécution et les fonctions source spécifiques aux commandes de pilotage (selon le standard AT, par exemple), ou encore l'application d'interface entre celles-ci.

Préférentiellement, ledit logiciel client comprend une application cliente de démarrage global, et au moins une application cliente de tâche réalisant au moins une tâche temps réel. Le jeu de fonctions sources de niveau 1 associé à l'application cliente de démarrage global comprend une fonction source de niveau 1 de démarrage global, dont le rôle est de fournir au logiciel principal des informations lui permettant d'initialiser et de dialoguer avec chaque application cliente de tâche.

Ainsi, le logiciel principal n'a besoin de connaître que cette fonction source de niveau 1 de démarrage global pour pouvoir lancer, lorsqu'il le souhaite, l'application cliente de démarrage global. Il n'a donc pas à connaître les points de dialogue (fonctions source de niveau 1 d'initialisation et de traitement d'un message) de chaque application cliente de tâche. Ces points de dialogue sont présentés en détail par la suite.

De façon préférentielle, ledit logiciel client comprend au moins deux applications clientes de tâche, associées chacune à un jeu de fonctions sources de niveau 1 et réalisant chacune au moins une tâche temps réel distincte. Ledit logiciel principal et/ou ledit logiciel client comprend(nnent) des moyens de partage des ressources de calcul entre lesdites applications clientes de tâche, de façon à permettre un fonctionnement multitâches temps réel.

Avantageusement, le jeu de fonctions sources de niveau 1 associé à chaque application cliente de tâche comprend une fonction source de niveau 1 d'initialisation, permettant d'initialiser ladite application cliente de tâche. Cette fonction source de niveau 1 d'initialisation est appelée une fois par le logiciel principal pour initialiser la tâche réalisée par l'application cliente de tâche concernée.

Préférentiellement, lesdites informations fournies par la fonction source de démarrage global au logiciel principal comprennent :
- le nombre d'applications clientes de tâche à initialiser ;
- pour chaque application cliente de tâche à initialiser, la fonction source de niveau 1 d'initialisation correspondante.

De façon préférentielle, le jeu de fonctions sources de niveau 1 associé à chaque application cliente de tâche comprend une fonction source de niveau 1 de réception et traitement d'un message provenant du logiciel principal, un paramètre de ladite fonction source de niveau 1 de réception et traitement étant ledit message.

Cette fonction source de niveau 1 de réception et traitement d'un message est appelée à chaque fois que le logiciel principal envoie un message à l'application cliente de tâche concernée. Chaque application cliente possède sa propre fonction source de niveau 1 de réception et traitement d'un message.

Préférentiellement, lesdites informations fournies par la fonction source de niveau 1 de démarrage global au logiciel principal comprennent en outre, pour chaque application cliente de tâche à initialiser, la fonction source de niveau 1 de réception et traitement.

De cette façon, le logiciel principal dispose de deux points de dialogue (fonctions source de niveau 1) avec chaque application cliente, à savoir la fonction source de niveau 1 d'initialisation et la fonction source de niveau 1 de réception et traitement.

Dans un mode de réalisation particulier de l'invention, le jeu de fonctions sources de niveau 1 associé à chaque application cliente de tâche comprend une fonction source de niveau 1 d'inscription à un service de boîte aux lettres géré par le logiciel principal, permettant à ladite application cliente de tâche de se voir affecter une boîte aux lettres qui lui est propre et dans laquelle elle souhaite recevoir des informations provenant d'au moins une source prédéterminée.

Préférentiellement, chaque source prédéterminée d'informations est une boîte aux lettres affectée à au moins une tâche principale effectuée par le logiciel principal, et contenant des informations que ladite tâche principale souhaite communiquer à une ou plusieurs autres entités. La ou les autres entités auxquelles une tâche principale souhaite communiquer des informations sont des applications clientes de tâche et/ou d'autres tâches principales.

Dans un mode de réalisation avantageux de l'invention, ledit logiciel client comprend au moins :
- une première application cliente réalisant une première tâche temps réel d'exécution de commandes de pilotage, envoyées à ladite première application par au moins une application cliente de pilotage et appartenant à un jeu de commandes de pilotage prédéterminé, ladite première application cliente étant basée notamment sur un jeu de fonctions d'exécution de niveau 2, spécifiques aux commandes de pilotage et permettant chacune l'exécution d'au moins une desdites commandes de pilotage,
- une seconde application cliente réalisant une seconde tâche temps réel telle que ladite seconde application cliente joue au moins un des deux rôles suivants :
   * le rôle d'une application cliente de pilotage, envoyant des commandes de pilotage à la première application cliente, et recevant de la première application cliente des réponses, résultant de l'exécution de certaines des commandes de pilotage ;
   * le rôle d'une application cliente de supervision, gérant l'exécution de commandes de pilotage envoyées par une application cliente de pilotage, dite application cliente externe, hébergée et exécutée par un équipement tiers coopérant avec le module de radiocommunication ;
   ladite seconde application cliente étant basée notamment sur un jeu de fonctions sources de niveau 2, spécifiques aux commandes de pilotage et permettant chacune l'envoi ou la réception, vers ou en provenance de la première application cliente, de commandes de pilotage ou de réponses à des commandes de pilotage,
- une application d'interface de niveau 2, spécifique aux commandes de pilotage, permettant l'interfaçage desdites fonctions sources et d'exécution de niveau 2, ladite application d'interface de niveau 2 s'appuyant elle-même sur ladite application d'interface de niveau 1.

Ainsi, la présente invention propose une nouvelle architecture logicielle au sein du module de radiocommunication (ouvertures des couches basses à un logiciel client embarqué), qui permet de supporter une nouvelle technique de pilotage du module de radiocommunication, simple et peu coûteuse.

Cette nouvelle technique de pilotage du module de radiocommunication consiste à héberger sur le module de radiocommunication un logiciel client comprenant :
- une première application cliente capable d'exécuter des commandes de pilotage (commandes AT par exemple). Dans la pratique, cette première application cliente pourra être fournie par le fabricant de module de radiocommunication ;
- une seconde application cliente, assurant le pilotage et/ou la supervision du module de radiocommunication, en faisant exécuter des commandes à la première application cliente.

Dans le cas où la seconde application cliente assure le pilotage du module de radiocommunication, ce dernier présente un fonctionnement autonome et peu coûteux. En effet, il n'a pas à coopérer avec un équipement tiers, et le logiciel principal et le logiciel client utilisent les mêmes ressources (même processeur et même mémoire).

Dans le cas où la seconde application cliente assure la supervision du module de radiocommunication, ce dernier n'est pas limité à un rôle d'esclave vis-à-vis de l'équipement tiers qui exécute le logiciel client de pilotage. En effet, la seconde application cliente gère le pilotage demandé par le logiciel client (externe) de pilotage, exécuté par l'équipement tiers. On notera que, dans ce cas, le logiciel client embarqué est un logiciel supplémentaire par rapport à la configuration de l'art antérieur. Toutefois, ce logiciel supplémentaire est peu coûteux puisqu'il utilise les mêmes ressources (processeur et mémoire) que le logiciel principal également hébergé par le module de radiocommunication.

Préférentiellement, pour permettre à la seconde application cliente de jouer le rôle d'une application cliente de pilotage :
- la seconde application cliente comprend des moyens d'envoi de commandes de pilotage vers les moyens d'exécution compris dans la première application cliente;
- la première application cliente comprend des moyens d'envoi des réponses, résultant de l'exécution de certaines des commandes de pilotage par les moyens d'exécution compris dans la première application cliente, vers la seconde application cliente ;
- la seconde application cliente comprend des moyens de traitement des réponses envoyées vers elle par la première application cliente.

De façon préférentielle, pour permettre à la seconde application cliente de jouer le rôle d'une application cliente de supervision :
- la première application cliente comprend des moyens d'aiguillage de commandes, en fonction d'une politique d'aiguillage de commandes déterminée, de façon à transmettre les commandes de pilotage provenant de l'application cliente externe vers la seconde application cliente et/ou vers les moyens d'exécution compris dans la première application cliente ;
- la seconde application cliente comprend des moyens de traitement des commandes de pilotage aiguillées vers elle par lesdits moyens d'aiguillage de commandes.

Avantageusement, la seconde application cliente comprend des moyens de sélection de la politique d'aiguillage de commandes appliquée par lesdits moyens d'aiguillage de commandes, parmi un ensemble de politiques d'aiguillage de commandes telles que respectivement :
- les commandes de pilotage provenant de l'application cliente externe sont transmises uniquement aux moyens d'exécution compris dans la première application cliente ;
- les commandes de pilotage provenant de l'application cliente externe sont transmises uniquement à la seconde application cliente ;
- les commandes de pilotage provenant de l'application cliente externe sont transmises aux moyens d'exécution compris dans la première application cliente et la seconde application cliente.

De façon avantageuse, lesdits moyens de traitement des commandes prennent, pour chaque commande, au moins une décision appartenant au groupe comprenant :
- envoi de la commande de pilotage vers les moyens d'exécution compris dans la première application cliente, la seconde application cliente comprenant à cet effet des moyens d'envoi de commandes de pilotage vers les moyens d'exécution;
- fourniture ou non d'une réponse, uniquement en fonction d'au moins une information relative à la commande, sans exécution de la commande, la seconde application cliente comprenant à cet effet des moyens d'envoi de la réponse à l'application cliente externe, via la seconde application cliente.

Préférentiellement, pour permettre à la seconde application cliente de jouer le rôle d'une application cliente de supervision :
- la première application cliente comprend des moyens d'aiguillage de réponses, en fonction d'une politique d'aiguillage de réponses déterminée, de façon à transmettre des réponses, résultant de l'exécution de certaines des commandes de pilotage par les moyens d'exécution compris dans la première application cliente, vers la seconde application cliente et/ou vers l'application cliente externe;
- la seconde application cliente comprend des moyens de traitement des réponses aiguillées vers elle par lesdits moyens d'aiguillage de réponses.

Avantageusement, la seconde application cliente comprend des moyens de sélection de la politique d'aiguillage de réponses appliquée par lesdits moyens d'aiguillage de réponses, parmi un ensemble de politiques d'aiguillage de réponses telles que respectivement :
- les réponses provenant des moyens d'exécution sont transmises uniquement à l'application cliente externe ;
- les réponses provenant des moyens d'exécution sont transmises uniquement à la seconde application cliente ;
- les réponses provenant des moyens d'exécution sont transmises à la seconde application cliente et à l'application cliente externe.

Préférentiellement, ledit jeu de fonctions sources de niveau 2 comprend notamment une fonction de traitement d'un message provenant de la première application, un paramètre de ladite fonction de traitement étant ledit message.

De façon préférentielle, ledit jeu de commandes de pilotage est un jeu de commandes AT standard. Ceci permet un développement rapide des première et seconde applications clientes, les commandes AT étant bien connues et déjà utilisées pour le développement des logiciels clients externes (hébergés par les équipements tiers). Ceci facilite également le développement d'une seconde application cliente fortement basée sur un logiciel client externe existant.

Avantageusement, ledit jeu de commandes de pilotage comprend, outre les commandes AT standard, une commande AT supplémentaire, dite commande de chargement, permettant à l'application cliente externe de charger une nouvelle seconde application cliente ou la totalité d'un nouveau logiciel client dans le module de radiocommunication.

De façon avantageuse, ledit jeu de commandes de pilotage comprend, outre les commandes AT standard, une commande AT supplémentaire, dite commande de désactivation, permettant à l'application cliente externe de désactiver la seconde application cliente.

Dans un mode de réalisation particulier de l'invention, ladite seconde application cliente comprend une sous-application cliente principale et au moins une sous-application cliente secondaire, esclave de la sous-application cliente principale, les traitements effectués par ladite seconde application cliente étant répartis entre ladite sous-application cliente principale et ladite au moins une sous-application cliente secondaire.

Le présent mode de réalisation particulier de l'invention se situe donc dans le contexte de la nouvelle technique précitée de pilotage d'un module de radiocommunication.

Dans ce contexte, il est proposer d'utiliser non pas une seconde application cliente "monobloc", mais une seconde application cliente "distribuée" ("multiblocs") comprenant une sous-application cliente principale combinée avec une ou plusieurs sous-application(s) cliente(s) secondaire(s). Chaque sous-application cliente secondaire est une sous-application esclave, en terme de lancement et d'arrêt, de la sous-application cliente principale qui l'appelle. Mais une fois démarrée, la sous-application cliente secondaire a accès, indépendamment de la sous-application cliente principale, à l'ensemble des fonctions d'exécution offertes par la première application cliente (via un mécanisme, détaillé par la suite, d'abonnement à un service d'envoi de messages provenant de la première application cliente).

Les sous-applications clientes secondaires sont des "blocs élémentaires" qui peuvent être fournis aux clients par un développeur tiers (typiquement le fabriquant du module de radiocommunication). Ainsi, le travail de développement du client est réduit puisqu'il ne développe que la "sous-application cliente principale", qui sous-traite certains traitements en faisant appel à une ou plusieurs sous-application(s) cliente(s) secondaire(s).

On notera que le client peut également développer lui-même des sous-applications clientes secondaires, s'il souhaite pouvoir les appeler dans différentes sous-applications clientes principales qu'il développe.

De façon préférentielle, ladite fonction source de niveau 1 d'initialisation est comprise dans le jeu de fonctions sources de niveau 1 associé à la seconde application cliente de tâche et permet d'initialiser ladite sous-application cliente principale.

Préférentiellement, la sous-application cliente principale est associée à un jeu de fonctions sources de niveau 2 comprenant une fonction source de niveau 2 d'abonnement à un service d'envoi de messages provenant de la première application cliente. Lors de cet abonnement, la sous-application cliente principale communique à la première application cliente l'adresse d'une fonction source de niveau 2 de traitement d'un message, dans laquelle la sous-application cliente principale souhaite recevoir des messages provenant de la première application cliente.

C'est ce mécanisme d'abonnement à un service d'envoi de messages provenant de la première application cliente qui permet à la sous-application cliente principale de faire appel à l'ensemble des fonctions d'exécution offertes par la première application cliente, en pouvant recevoir les messages envoyés par la première application cliente dans le cadre de l'exécution de ces fonctions.

Préférentiellement, la sous-application cliente secondaire est associée à un jeu de fonctions sources de niveau 2 comprenant une fonction source de niveau 2 d'initialisation de la sous-application cliente secondaire, qui est appelée par la sous-application cliente principale.

De cette façon, la sous-application cliente principale n'a à connaître que ce point de dialogue ("fonction source de niveau 2 d'initialisation de la sous-application cliente secondaire"), ainsi que son pendant présenté ci-après ("fonction source de niveau 2 d'arrêt de la sous-application cliente secondaire"). Il s'agit donc d'une solution simple et efficace aux problèmes de dialogue entre sous-application cliente principale et sous-application cliente secondaire. En effet, le développeur d'une sous-application cliente secondaire n'a pas à écrire autant de versions de celle-ci que de clients voulant l'intégrer dans leurs sous-applications clientes principales. Il suffit qu'il leur indique les deux points de dialogue précités.

Il est à noter qu'il convient d'éviter que deux développeurs de sous-applications clientes secondaires utilisent des points de dialogue identiques. Pour cela, on peut par exemple prévoir que chaque développeur demande auprès d'un service central un identifiant unique pour chaque sous-application cliente secondaire qu'il souhaite développer.

Par ailleurs, le mécanisme de dialogue entre la sous-application cliente principale et la sous-application cliente secondaire permet notamment à la sous-application cliente secondaire de communiquer à la sous-application cliente principale les résultats de l'exécution de sa ou ses tâches. Le dialogue peut être bidirectionnel ou monodirectionnel.

De façon préférentielle, le jeu de fonctions sources de niveau 2 associé à la sous-application cliente secondaire comprend une fonction source de niveau 2 d'abonnement à un service d'envoi de messages provenant de la première application cliente. Lors de cet abonnement, la sous-application cliente secondaire communique à la première application cliente l'adresse d'une fonction source de niveau 2 de traitement d'un message, dans laquelle la sous-application cliente secondaire souhaite recevoir des messages provenant de la première application cliente.

Préférentiellement, ladite fonction source de niveau 2 d'initialisation de la sous-application cliente secondaire comprend au moins un paramètre permettant la mise en oeuvre d'un mécanisme de dialogue entre la sous-application cliente principale et la sous-application cliente secondaire.

De façon, préférentielle, le jeu de fonctions sources de niveau 2 associé à la sous-application cliente secondaire comprend une fonction source de niveau 2 d'arrêt de la sous-application cliente secondaire, qui est appelée par la sous-application cliente principale.

Préférentiellement, le jeu de fonctions sources de niveau 2 associé à la sous-application cliente secondaire comprend une fonction source de niveau 2 de désabonnement audit service d'envoi de messages provenant de la première application cliente.

L'invention concerne également un procédé d'ouverture de l'accès à au moins certaines des fonctionnalités d'un logiciel principal d'un module de radiocommunication. On suppose que le module de radiocommunication est du type hébergeant et exécutant un logiciel principal comprenant une application de gestion du système d'exploitation (OS), une application de gestion des radiocommunications (couche 3 GSM) et une application de gestion de périphériques pouvant être connectés au module de radiocommunication (HWL). Selon l'invention, chacune desdites applications comprises dans le logiciel principal est associée à un jeu de fonctions d'exécution de niveau 1. Le module de radiocommunication héberge et exécute en outre au moins un logiciel client comprenant au moins une application cliente, associée à un jeu de fonctions sources de niveau 1. Le logiciel principal et/ou ledit logiciel client comprend(nnent) une application d'interface de niveau 1, permettant l'interfaçage des fonctions sources de niveau 1, associées à ladite application cliente, avec les fonctions d'exécution de niveau 1, associées à ladite application de gestion du système d'exploitation et à au moins une desdites applications de gestion des radiocommunications et de gestion de périphériques.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'un mode de réalisation particulier d'un module de radiocommunication selon la présente invention, faisant apparaître le logiciel principal comprenant les couches basses, ainsi que le logiciel client comprenant une application d'interface de niveau 1 et une pluralité d'applications clientes ;
- la figure 2 illustre un mécanisme de lancement des applications clientes comprises dans le logiciel client ;
- la figure 3 illustre un mécanisme de dialogue entre deux applications clientes de tâche comprises dans le logiciel client ;
- la figure 4 illustre un mécanisme d'appel, au sein d'une application cliente, d'une fonction source de niveau 1 relative au bloc "HWL" ;
- la figure 5 illustre un mécanisme d'appel, au sein d'une application cliente, d'une fonction source de niveau 1 relative au bloc "couche 3 GSM" ;
- la figure 6 illustre un mécanisme d'appel, au sein d'une application cliente, de fonctions source de niveau 1 relatives aux blocs "HWL" et "couche 3 GSM" ;
- la figure 7 illustre un mécanisme d'abonnement d'une application cliente à un service de boîte aux lettres géré par le logiciel principal ;
- la figure 8 illustre une nouvelle technique de pilotage du module de radiocommunication, supportée par l'architecture logicielle selon l'invention, au sein du module de radiocommunication.

L'invention concerne donc un module de radiocommunication hébergeant et exécutant, avec le même jeu de ressources (processeur et mémoire), un logiciel principal et (au moins) un logiciel client embarqué.

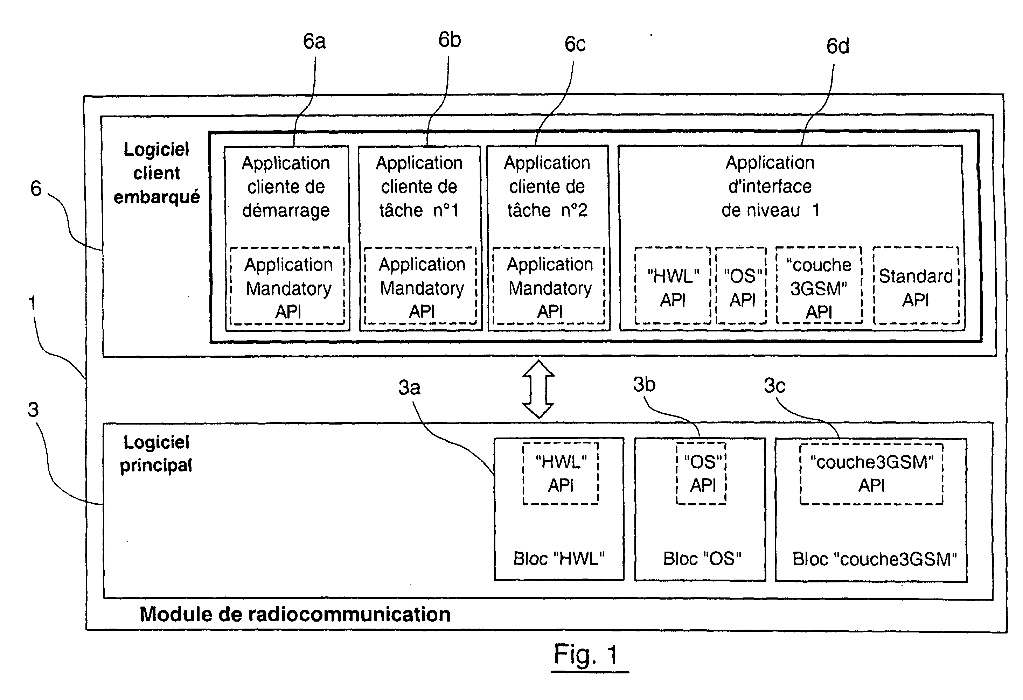

De façon classique, comme illustré sur la **figure 1,** le logiciel principal 3 comprend :
- un bloc "HWL" 3a, qui est une application de gestion de périphériques pouvant être connectés au module de radiocommunication ;
- un bloc "OS" 3b, qui est une application de gestion du système d'exploitation, gérant les aspects système tels que le gestionnaire de tâches, le gestionnaire de mémoire, le gestionnaire de temporisation, etc. ;
- un bloc "couche 3 GSM", qui est une application de gestion des radiocommunications, gèrant les aspects réseau tels que la gestion des appels sortants et entrants, la gestion des réceptions et envois de messages courts texte, etc.

Chacun des trois blocs "HWL", "OS" et "couche 3 GSM" est associé à un jeu de fonctions d'exécution de niveau 1.

Dans le mode de réalisation particulier illustré sur la **figure 1**, le logiciel client embarqué 6 (concept propre à la présente invention) comprend :
- trois applications clientes, à savoir : une application cliente de démarrage 6a et deux applications clientes de tâche, n°1 6b et n°2 6c, chacune de ces applications clientes étant associée à un jeu de fonctions sources de niveau 1 ;
- une application d'interface de niveau 1 6d, permettant l'interfaçage des fonctions sources de niveau 1 (associées aux applications clientes 6a, 6b et 6c) avec les fonctions d'exécution de niveau 1 (associées aux blocs "HWL" 3a, "OS" 3b et "couche 3 GSM" 3c).

Ainsi, les applications clientes 6a, 6b et 6c communiquent avec les blocs "HWL" 3a, "OS" 3b et "couche 3 GSM" 3c, via l'application d'interface de niveau 1 6d. A cet effet, chacun de ces éléments comprend une interface "API" (pour "Application Programming Interface" en anglais). On rappelle qu'une interface "API" est une description des règles de communication correspondant à un certain ensemble fonctionnel.

Chacune des applications clientes 6a, 6b et 6c comprend un bloc "Application Mandatory API", formant interface décrivant des fonctions devant être définies dans l'application cliente. Il est clair que les blocs "Application Mandatory API" des différentes applications clientes peuvent ne pas être strictement identiques.

L'application d'interface (ou librairie d'interface application) de niveau 1 6d comprend les quatre blocs suivants :
- un bloc "HWL API", formant interface décrivant l'accès au bloc "HWL" 3a, cette interface décrit des fonctions se trouvant dans la librairie d'interface application de niveau 1 ;
- un bloc "OS API", formant interface décrivant l'accès au bloc "OS" 3b, cette interface décrit des fonctions se trouvant dans la librairie d'interface application de niveau 1 ;
- un bloc "couche 3 GSM API", formant interface décrivant l'accès au bloc "couche 3 GSM" 3c, cette interface décrit des fonctions se trouvant dans la librairie d'interface application de niveau 1 ;
- un bloc "Standard API", formant interface décrivant l'accès à des fonctions standard, cette interface décrit des fonctions se trouvant dans la librairie d'interface application de niveau 1.

Côté logiciel principal 3 :
- le bloc "HWL" 3a comprend un bloc "HWL API ", pendant du bloc du même nom compris dans l'application d'interface de niveau 1 6d ;
- le bloc "OS" 3b comprend un bloc "OS API", pendant du bloc du même nom compris dans l'application d'interface de niveau 1 6d ;
- le bloc "couche 3 GSM" 3c comprend un bloc "couche 3 GSM API", pendant du bloc du même nom compris dans l'application d'interface de niveau 1 6d.

L'application d'interface de niveau 1 6d est par exemple un fichier binaire, qui se présente sous la forme d'une librairie (déjà compilée).

Le logiciel principal 3 est par exemple un fichier binaire, résultant d'une édition de lien entre une pluralité de fichiers objets, résultant eux-mêmes de la compilation de fichiers source contenant notamment les blocs "HWL" 3a, "OS" 3b et "couche 3 GSM" 3c.

En ce qui concerne les applications clientes 6a, 6b et 6c, on peut envisager les variantes suivantes :
- soit les applications clientes sont contenues dans le logiciel client 6 sous la forme d'un même fichier binaire, résultant d'une édition de lien impliquant notamment les fichiers objet contenant ces applications clientes ;
- soit les applications clientes sont contenues dans le logiciel client 6 sous la forme de plusieurs fichiers binaires (chaque fichier binaire contenant une ou plusieurs applications clientes).
Le logiciel client embarqué 6 et le logiciel principal 3 utilisent chacun une partie distincte d'une même mémoire vive (RAM). Le client définit la taille de la pile mémoire nécessaire à la bonne exécution du logiciel client embarqué. Une tentative d'accès de l'un des deux logiciels à une partie de la mémoire vive réservée à l'autre logiciel provoque un arrêt de fonctionnement.

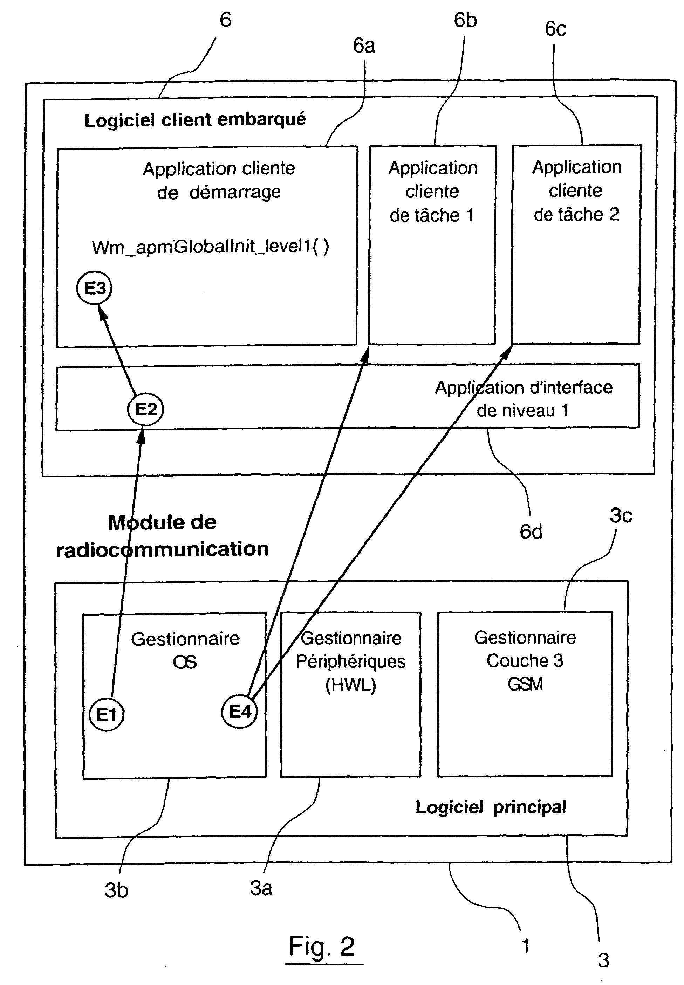

On présente maintenant, en relation avec la **figure 2**, un mécanisme de lancement des applications clientes 6a, 6b et 6c comprises dans le logiciel client 6.

Les éléments compris dans le module de radiocommunication 1, et déjà présentés ci-dessus en relation avec la figure 1, conservent les mêmes références numériques.

Chacune des étapes de ce mécanisme est illustrée sur la figure 2 par un cercle dans lequel est inscrit le numéro de l'étape concernée. La même convention est adoptée dans les figures suivantes relatives à la présente invention (et qui sont décrites en détail dans la suite de la description).

Le fonctionnement de ce mécanisme de lancement des applications clientes 6a, 6b et 6c peut être résumé ainsi :
- étape "1" : le logiciel principal 3 détecte la présence d'une application cliente de démarrage 6a et la lance par l'intermédiaire du gestionnaire OS 3b (autre nom du "bloc OS" présenté auparavant) ;
- étape "2" : le lancement de l'application cliente de démarrage 6a se fait via l'application d'interface de niveau 1 6d. Cette dernière appelle au sein de l'application cliente de démarrage 6a une fonction source (de niveau 1) de démarrage global. Cette fonction source ("wm_apmGlobalInit_level1()") est présentée en détail dans la suite de la description ;
- étape "3" : au sein de l'application cliente de démarrage 6a, la fonction source "wm_apmGlobalInit_level1()" effectue un démarrage global consistant à à fournir au logiciel principal 3 des informations permettant à ce dernier d'initialiser et dialoguer avec chaque application cliente de tâche 6b et 6c.

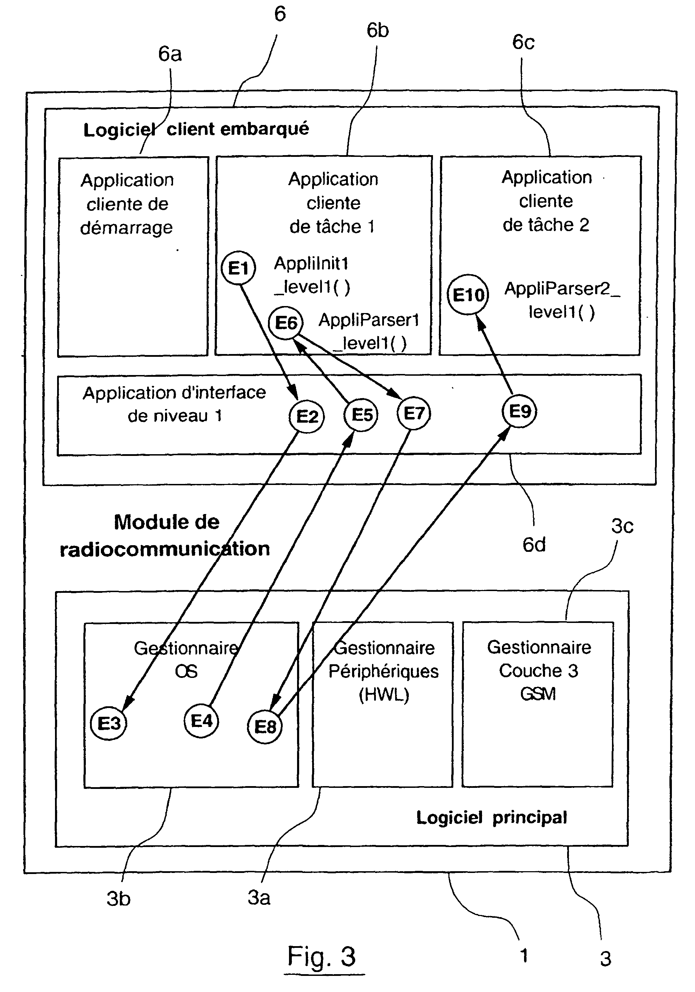

Ces informations sont par exemple les suivantes :
- le nombre d'applications clientes de tâche (deux dans l'exemple décrit ci-dessus) comprises dans le logiciel client embarqué,
- les fonctions de dialogue associées à chacune de ces applications clientes de tâche. Ces fonctions source de dialogue ("AppliInit_n°x_level1" et "AppliParser_n°x_level1") sont présentées en détail dans la suite de la description ;
- étape "4" : au sein du logiciel principal 3, le gestionnaire OS 3b initialise les applications clientes de tâche 6b et 6c en appelant leurs fonctions d'initialisation respectives ("AppliInit1 _level1" et "AppliInit2 _level1").
On présente maintenant, en relation avec la **figure 3,** un mécanisme de dialogue entre deux applications clientes de tâche 6b, 6c comprises dans le logiciel client 6.

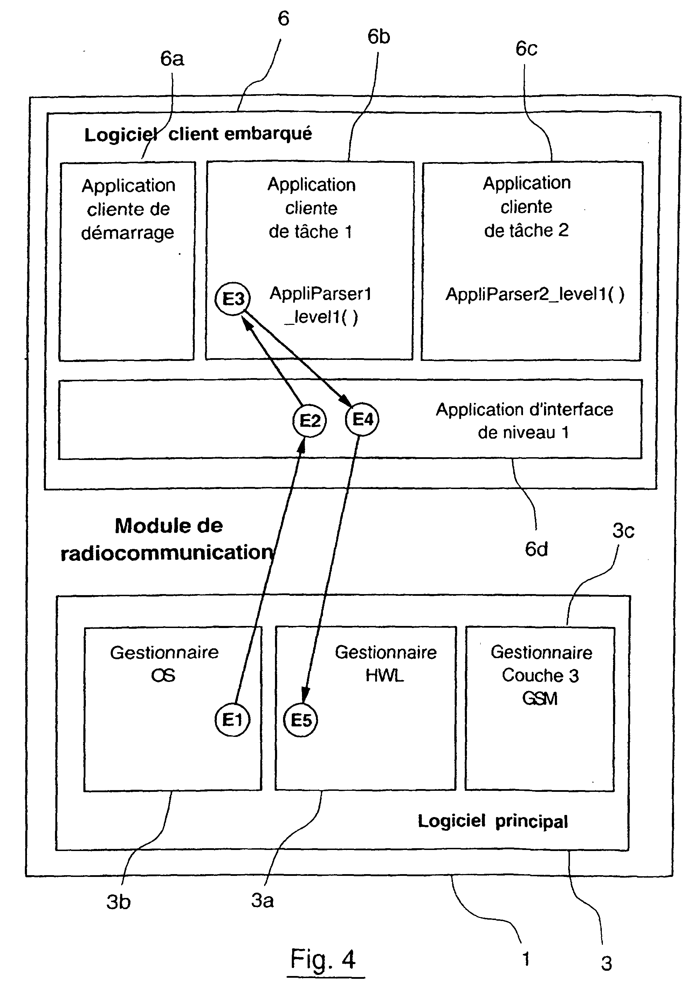

Le fonctionnement de ce mécanisme peut être résumé ainsi :
- étape "1" : le logiciel principal 3 a initialisé l'application cliente de tâche n°1 par l'appel de la fonction source «AppliInit1_level1()» au travers de l'application d'interface de niveau 1 6d. Cette fonction source effectue l'appel à une fonction ("wm_osStartTimer_level1()") de déclenchement d'une temporisation dans le logiciel principal ;
- étape "2" : l'application d'interface 6d appelle, au sein du logiciel principal 3, la ou les fonction d'exécution appropriée(s) ;
- étape "3" : au sein du logiciel principal 3, le gestionnaire OS 3b effectue le traitement demandé qui consiste à armer une temporisation ;
- étape "4" : après échéance de la temporisation, le gestionnaire OS 3b informe l'application cliente de tâche n°1 ayant armé la temporisation, au travers de l'application d'interface 6d ;
- étape "5" : le dialogue avec l'application cliente de tâche n°1 se fait via l'application d'interface 6d, qui appelle au sein de l'application cliente de tâche n°1 la fonction source "AppliParser1_level1()" précitée ;
- étape "6" : au sein de l'application cliente de tâche n°1, la fonction source "AppliParser1_level1()" appelée envoie un message à l'application cliente de tâche n°2, en appelant une fonction source "wm_osSendMsg_level1()" (présentée en détail par la suite) ;
- étape "7" : l'application d'interface 6d appelle, au sein du logiciel principal 3, la ou les fonction d'exécution appropriée(s) ;
- étape "8" : au sein du logiciel principal 3, le gestionnaire OS 3b effectue le traitement demandé qui consiste à envoyer le message à l'application cliente de tâche n°2, à travers l'application d'interface 6d ;
- étape "9" : le dialogue avec l'application cliente de tâche n°2 se fait via l'application d'interface 6d, qui appelle au sein de l'application cliente de tâche n°2 la fonction source "AppliParser2_level1()" précitée ;
- étape "10" : au sein de l'application cliente de tâche n°2, la fonction source "AppliParser2_level1()" appelée traite le message reçu.
On présente maintenant, en relation avec la **figure 4**, un mécanisme d'appel, au sein d'une application cliente, d'une fonction source de niveau 1 relative au bloc "HWL".

On suppose qu'une temporisation a été armée par l'application cliente de tâche n°1, et qu'elle est en attente d'expiration de cette temporisation.

Dans cet exemple, les appels au gestionnaire HWL 3a sont effectués par l'application cliente de tache n°1, il est clair que cet exemple reste valable si les appels sont effectués par toute autre application cliente de tâche du logiciel client embarqué.

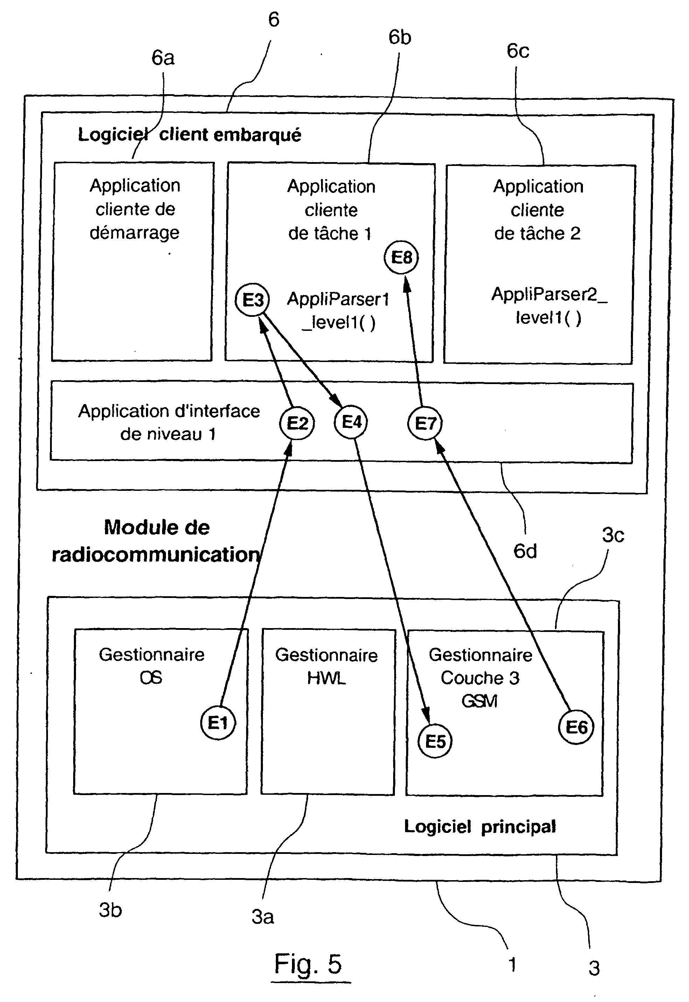

Le fonctionnement de ce mécanisme peut être résumé ainsi :
- étape "1" : après échéance de la temporisation, le gestionnaire OS 3b informe l'application cliente de tâche n°1 ayant armé la temporisation, au travers de l'application d'interface 6d ;
- étape "2" : le dialogue avec l'application cliente de tâche n°1 se fait via l'application d'interface 6d, qui appelle au sein de l'application cliente de tâche n°1 la fonction source "AppliParser1_level1()" ;
- étape "3" : au sein de l'application cliente de tâche n°1, la fonction source "AppliParser1_level1()" souhaite par exemple lire une valeur stockée en mémoire Eeprom. Pour cela, elle appelle la fonction "wm_hw1E2pRead_level1()" ;
- étape "4" : l'application d'interface 6d appelle, au sein du logiciel principal 3, la ou les fonction d'exécution appropriée(s) dans le gestionnaire HWL 3a ;
- étape "5" : au sein du logiciel principal 3, le gestionnaire HWL 3a effectue le traitement demandé, qui consiste à lire une valeur stockée en mémoire Eeprom. Puis l'application cliente de tâche n°1, via l'application d'interface 6d, retourne la valeur lue à l'application cliente de tâche n°1.
Il est clair que la fonction "wm_hw1E2pRead_level1()", discutée ci-dessus, n'est qu'un exemple parmi une pluralité de fonctions source de niveau 1 relatives au bloc "HWL".
On présente maintenant, en relation avec la **figure 5**, un mécanisme d'appel, au sein d'une application cliente, d'une fonction source de niveau 1 relative au bloc "couche 3 GSM".
Les hypothèses et remarques indiquées ci-dessus en commentaires de la figure 4 s'appliquent également à la présente figure 5.

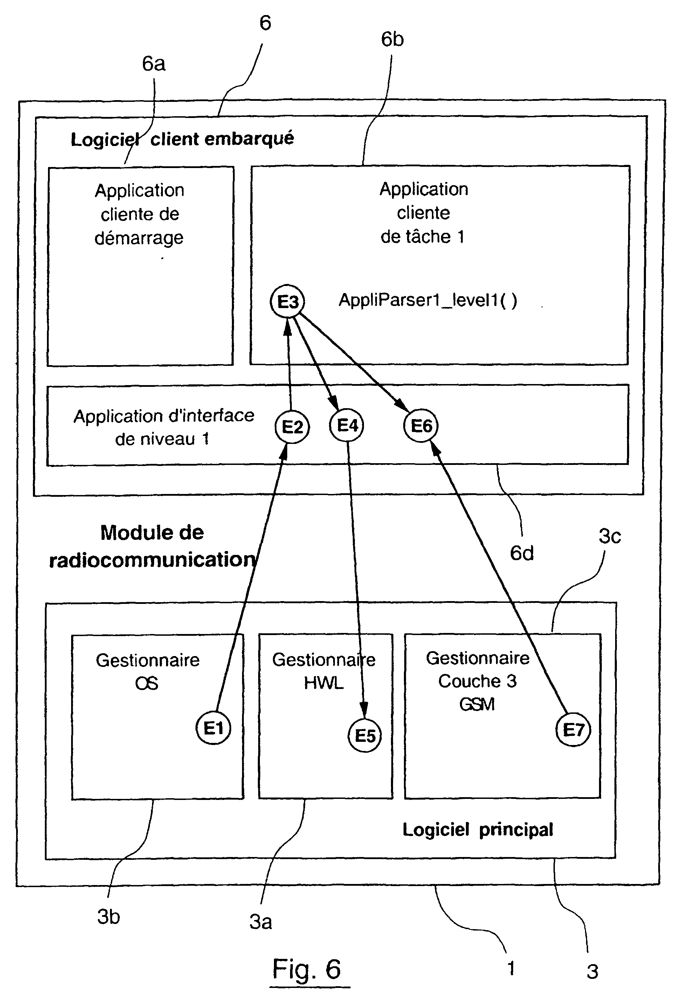

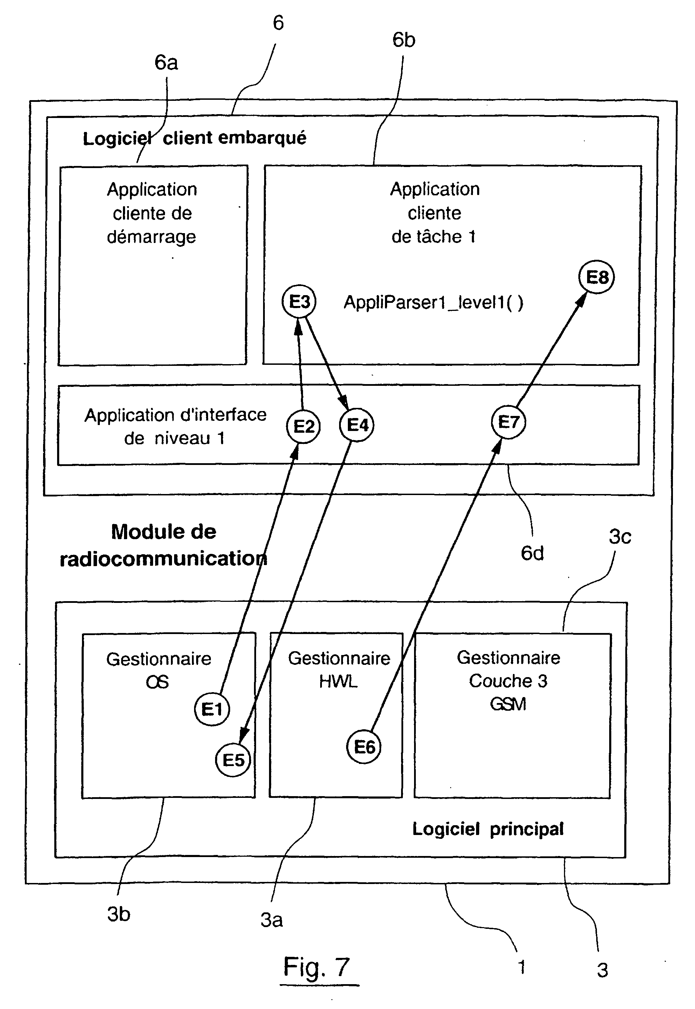

Le fonctionnement de ce mécanisme peut être résumé ainsi :
- étape "1" : après échéance de la temporisation, le gestionnaire OS 3b informe l'application cliente de tâche n°1 ayant armé la temporisation, au travers de l'application d'interface 6d ;
- étape "2" : le dialogue avec l'application cliente de tâche n°1 se fait via l'application d'interface 6d, qui appelle au sein de l'application cliente de tâche n°1 la fonction source "AppliParser1_level1()" ;
- étape "3" : au sein de l'application cliente de tâche n°1, la fonction source "AppliParser1_level1()" souhaite par exemple envoyer un message au réseau. Pour cela, elle appelle la fonction "wm_osRtkSend_level1()" ;
- étape "4" : l'application d'interface 6d appelle, au sein du logiciel principal 3, la ou les fonction d'exécution appropriée(s) dans le gestionnaire "Couche 3 GSM" 3c ;
- étape "5" : au sein du logiciel principal 3, le gestionnaire "Couche 3 GSM" 3c effectue le traitement demandé ;
- étape "6" : après traitement (envoi d'un message au réseau) et obtention d'une réponse du réseau, le gestionnaire "Couche 3 GSM" 3c informe l'application cliente de tâche n°1, via l'application d'interface 6d ;
- étape "7" : le dialogue avec l'application cliente de tâche n°1 se fait via l'application d'interface 6d, qui appelle au sein de l'application cliente de tâche n°1 la fonction source "AppliParser1_level1()" précitée ;
- étape "8" : au sein de l'application cliente de tâche n°1, la fonction source "AppliParser1_level1()" traite le message reçu.
Il est clair que la fonction "wm_osRtkSend_level1()", discutée ci-dessus, n'est qu'un exemple parmi une pluralité de fonctions source de niveau 1 relatives au bloc "couche 3 GSM".
On présente maintenant, en relation avec la **figure 6,** un mécanisme d'appel, au sein d'une application cliente, de fonctions source de niveau 1 relatives aux blocs "HWL" et "couche 3 GSM".
Dans cet exemple, on suppose que l'application cliente de tâche n°1 souhaite lire une valeur stockée en mémoire Eeprom, puis envoyer un message au réseau. Elle dialogue pour cela :
- avec le bloc "HWL" 3a (étapes "1" à "5" correspondant aux étapes "1" à "5" de la figure 4 décrite ci-dessus),
- puis avec le bloc "Couche 3 GSM" 3c (étapes "3bis", "6" et "7" correspondant aux étapes "3" à "5" de la figure 5 décrite ci-dessus).
On présente maintenant, en relation avec la **figure 7**, un mécanisme d'abonnement d'une application cliente à un service de boîte aux lettres géré par le logiciel principal.

Le fonctionnement de ce mécanisme peut être résumé ainsi :
- étape "1" : après échéance de la temporisation, le gestionnaire OS 3b informe l'application cliente de tâche n°1 ayant armé la temporisation, au travers de l'application d'interface 6d ;
- étape "2" : le dialogue avec l'application cliente de tâche n°1 se fait via l'application d'interface 6d, qui appelle au sein de l'application cliente de tâche n°1 la fonction source "AppliParser1_level1()" ;
- étape "3" : au sein de l'application cliente de tâche n°1, la fonction source "AppliParser1_level1()" souhaite par exemple demander un abonnement aux informations relatives à la batterie (indication de niveau de charge, par exemple). Pour cela, elle appelle une fonction source ("wm_MbxSubscribe()") d'inscription à un service de boîte aux lettres géré par le logiciel principal, de façon à se voir affecter une boîte aux lettres qui lui est propre et dans laquelle elle souhaite recevoir des informations provenant d'au moins une source prédéterminée (la tâche "batterie" dans cet exemple). Cette fonction source est présentée en détail par la suite ;
- étape "4" : l'application d'interface 6d appelle, au sein du logiciel principal 3, la ou les fonction d'exécution appropriée(s) dans le gestionnaire OS 3b ;
- étape "5" : au sein du logiciel principal 3, le gestionnaire OS 3b effectue le traitement demandé, qui consiste dans cet exemple à mémoriser l'application cliente de tâche n°1 en tant que destinatrice des informations de batterie ;
- étape "6" : quand des informations de batterie sont disponibles, le gestionnaire HWL 3a les envoie à l'application cliente de tâche n°1, via l'application d'interface 6d. Pour cela, le gestionnaire HWL 3a consulte en interne le gestionnaire OS 3b, afin de connaître la ou les boîte(s) aux lettres destinatrice(s) de ces informations ;
- étape "7" : le dialogue avec l'application cliente de tâche n°1 se fait via l'application d'interface 6d, qui appelle au sein de l'application cliente de tâche n°1 la fonction source "AppliParser1_level1()" précitée ;
- étape "8" : au sein de l'application cliente de tâche n°1, la fonction source "AppliParser1_level1()" traite les informations de batterie reçues.

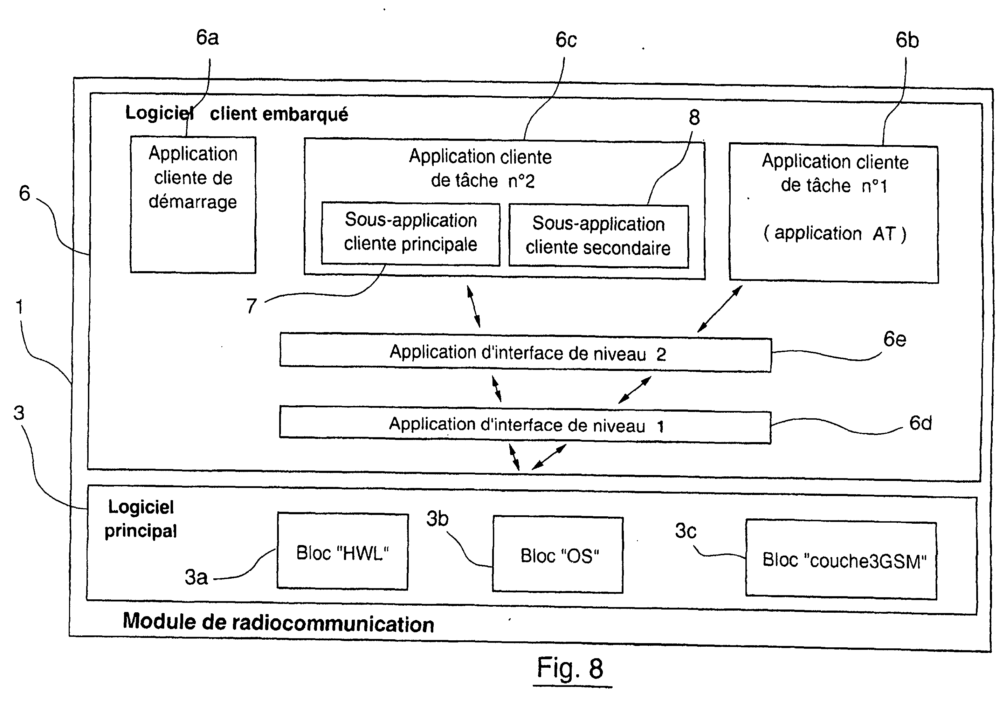

Il est à noter que le bloc "OS" 3b comprend un gestionnaire de tâches. Ce dernier gère aussi bien les tâches offertes par le logiciel principal 3 que celles offertes par le logiciel client 6. Chaque tâche est associée à une boîte aux lettres, qui est assimilée à la source des informations générées par cette tâche. Ainsi, à chaque fois q'une tâche veut communiquer avec une autre tâche, elle utilise le gestionnaire de tâche du bloc "OS". Certaines tâches du logiciel principal 3 ont des informations à communiquer au logiciel client embarqué 6. Ce dernier peut décider vers laquelle de ses applications de tâche il veut recevoir ces informations. Ainsi, dans l'exemple décrit ci-dessus, la tâche "batterie" du logiciel principal 3 possède des informations qui concernent la gestion de la batterie et c'est l'application cliente de tâche n°1 qui les gère (et donc souhaite les recevoir dans sa boîte aux lettres).
On présente maintenant, en relation avec la **figure 8**, une nouvelle technique de pilotage du module de radiocommunication, supportée par l'architecture logicielle selon l'invention, au sein du module de radiocommunication.
Un mode de réalisation particulier de l'architecture logicielle du module de radiocommunication, selon l'invention, a été présenté ci-dessus en relation avec les figures 1 à 7. Dans ce mode de réalisation particulier, le logiciel principal 3 comprend les blocs "HWL" 3a, "OS" 3b et "couche 3 GSM" 3c, et le logiciel client embarqué 6 comprend une application cliente de démarrage 6a, deux applications clientes de tâche (n°1) 6b et (n°2) 6c, et une application d'interface de niveau 1 6d.

Dans la suite de la description, on suppose que les commandes de pilotage sont des commandes AT. Pour plus de précisions concernant les commandes AT, on pourra se reporter d'une part aux normes "GSM 07.05" et "GSM 07.07" de l'ETSI et d'autre part à la recommandation V25ter de l'ITU-T, qui sont insérées ici par référence. Il est clair toutefois que la présente invention n'est nullement limitée à ce type de commande de pilotage.
Afin de proposer une nouvelle technique de pilotage du module de radiocommunication, on prévoit que :
- l'application cliente de tâche n°1 réalise une première tâche temps réel d'exécution de commandes AT. Ces dernières sont envoyées à l'application cliente de tâche n°1 par (au moins) une application cliente de pilotage ;
- l'application cliente de tâche n°2 réalise une seconde tâche temps réel lui permettant de jouer au moins un des deux rôles suivants :
   * le rôle d'une **application cliente de pilotage,** envoyant des commandes AT à l'application cliente de tâche n°1, et recevant de l'application cliente de tâche n°1 des réponses, résultant de l'exécution de certaines des commandes AT ;
   * le rôle d'une **application cliente de supervision,** gérant l'exécution de commandes AT envoyées par une application cliente de pilotage, dite application cliente externe, hébergée et exécutée par un équipement tiers coopérant avec le module de radiocommunication.
L'application cliente de tâche n°1 est basée notamment sur un jeu de fonctions d'exécution de niveau 2, spécifiques aux commandes AT et permettant chacune l'exécution d'au moins une des commandes AT.
L'application cliente de tâche n°2 est basée notamment sur un jeu de fonctions sources de niveau 2, spécifiques aux commandes AT et permettant chacune l'envoi ou la réception, vers ou en provenance de l'application cliente de tâche n°1, de commandes AT ou de réponses à des commandes AT.
On prévoit en outre une application d'interface de niveau 2 6e, spécifique aux commandes AT. Elle permet l'interfaçage des fonctions sources et d'exécution de niveau 2. Cette interface de niveau 2 6e s'appuie elle-même sur l'application d'interface de niveau 1 6d.
Il est important de bien distinguer :
- les jeux de fonctions source et d'exécution de niveau 2, spécifiques aux commandes AT, et qui sont utilisés dans les relations entre les applications clientes de tâche n°1 et 2 ;
- les jeux de fonctions source et d'exécution de niveau 1, présentés ci-dessus de façon détaillée en relation avec les figures 1 à 7 et avec l'annexe 1, et qui sont utilisés dans les relations entre chaque application cliente de tâche (n° 1 ou 2) et les blocs "HWL", "OS" et "couche 3 GSM" du logiciel principal 3.

Dans le cas où l'application cliente de tâche n°2 joue le **rôle d'une application cliente de pilotage,** le fonctionnement de la technique de pilotage peut être résumé ainsi
- étape "1" : l'application cliente de tâche n°2 appelle une fonction source (wm_atSendCommand_level2") d'envoi vers l'application cliente de tâche n°1 d'une ou plusieurs commande(s) AT. Cette fonction source est présentée en détail dans la suite de la description ;
- étape "2" : l'application d'interface de niveau 2 6e appelle la ou les fonctions d'exécution appropriées au sein de l'application cliente de tâche n°1 ;
- étape "3" : l'application cliente de tâche n°1 exécute la ou les commande(s) AT ;
- étape "4" : après exécution, l'application cliente de tâche n°1 envoie la ou les réponse(s) AT à l'application cliente de tâche n°2 (si la commande d'envoi précitée a été paramétrée en ce sens) ;
- étape "5" : cette ou ces réponse(s) est(sont) expédiée(s) via l'application d'interface de niveau 2, qui appelle, au sein de l'application cliente de tâche n°2, la fonction source ("wm_apmAppliParser_level2") de traitement d'un message provenant de l'application cliente de tâche n°1. Un paramètre de cette fonction source de traitement est le message qui contient la ou les réponse(s) précitée(s). Cette fonction source est présentée en détail dans la suite de la description ;
- étape "6" : au sein de l'application cliente de tâche n°2, la fonction source de traitement traite la réponse.

On présente maintenant de façon détaillée le cas où l'application cliente de tâche n°2 joue le **rôle d'une application cliente de supervision.**

Dans ce second cas, le module de radiocommunication n'est pas autonome (contrairement au premier cas), mais est piloté par un équipement tiers avec lequel il coopère, par exemple via une liaison série. Une application cliente externe, hébergée par l'équipement tiers, envoie des commandes AT au module de radiocommunication, en vue de leur exécution par ce dernier.

Dans ce second cas, de façon transparente pour l'application cliente externe, l'application cliente de tâche n°2 supervise l'exécution (ou non) des commandes AT par l'application cliente de tâche n°1.

L'application cliente de tâche n°2 (application de supervision) peut décider de la mise en oeuvre, au sein du module de radiocommunication, notamment de :
- un mécanisme d'aiguillage et de traitement des commandes AT, envoyées par l'application cliente externe. Trois variantes de mise en oeuvre de ce mécanisme sont par exemple proposées, selon lesquelles l'application cliente de tâche n°1 transmet les commandes AT qu'elle reçoit : soit uniquement à des moyens d'exécution compris dans l'application cliente de tâche n°1 (première variante), soit uniquement à l'application cliente de tâche n°2 (seconde variante), soit aux deux (troisième variante) ;
- un mécanisme d'aiguillage et de traitement des réponses AT, résultant de l'exécution par des moyens d'exécution compris dans l'application cliente de tâche n°1 de commandes AT. Trois variantes de mise en oeuvre de ce mécanisme sont par exemple proposées, selon lesquelles les réponses AT générées par l'application cliente de tâche n°1 sont transmises respectivement uniquement à l'application cliente externe (première variante), uniquement à l'application cliente de tâche n°2 (seconde variante), ou bien aux deux (troisième variante).

On notera que la première variante de chacun des deux mécanismes précités (relatifs aux commandes AT et aux réponses AT respectivement) signifie que l'application cliente de tâche n°2 peut décider d'être totalement passive à certains moments.

On présente maintenant la seconde variante du mécanisme d'aiguillage et de traitement des commandes AT, qui permet à l'application cliente de tâche n°2 de filtrer les commandes AT provenant de l'application cliente externe.

Le fonctionnement de cette seconde variante du mécanisme d'aiguillage et de traitement des commandes AT peut être résumé en deux phases successives, à savoir :
- une phase préalable de sélection, par l'application cliente externe, de la (seconde) politique d'aiguillage de commandes AT, selon laquelle les commandes AT sont retransmises uniquement à l'application cliente de tâche n°2, et
- une phase de traitement, selon la (seconde) politique d'aiguillage de commandes sélectionnée, des commandes AT envoyées par l'application cliente externe.

La phase préalable de sélection de la seconde politique d'aiguillage de commandes AT comprend les étapes suivantes :
- étape "1" : l'application cliente de tâche n°2 appelle une fonction source ("wm_atCmdPreParserSubscribe_level2") d'inscription auprès de l'application cliente de tâche n°1 à un service d'aiguillage de commandes AT (ou "command pre-parsing service" en anglais), avec un paramètre de cette fonction d'inscription qui indique le choix de la seconde politique d'aiguillage de commandes AT. Cette fonction source est présentée en détail dans la suite de la description ;
- étape "2" : l'application d'interface de niveau 2 6e appelle, au sein de l'application cliente de tâche n°1, la ou les fonction(s) d'exécution appropriée(s), dite(s) fonction d'enregistrement de l'inscription au service d'aiguillage de commandes AT ;
- étape "3" : l'application cliente de tâche n°1 établit l'inscription demandée par l'application cliente de tâche n°2, via l'application d'interface de niveau 2.

Dans un seul souci de simplification, on suppose dans la suite de la description que la ou les fonction(s) d'enregistrement de l'inscription au service d'aiguillage de commandes AT sont comprises, au sein de l'application cliente de tâche n°1, dans les moyens d'exécution de commandes AT. Egalement dans un seul souci de simplification, on suppose dans la suite de la description que les moyens d'aiguillage de commandes (discutés ci-après) sont compris, au sein de l'application cliente de tâche n°1, dans les moyens d'exécution de commandes AT.

La phase de traitement des commandes AT comprend les étapes suivantes :
- étape "4" : l'application cliente externe envoie une commande AT à l'application cliente de tâche n°1 ;
- étape "5" : la liaison série transmet la commande AT à des moyens d'aiguillage de commandes, compris dans les moyens d'exécution compris dans l'application cliente de tâche n°1 et fonctionnant selon la seconde politique d'aiguillage de commandes AT (sélectionnée lors de la phase préalable) ;
- étape "6" : sans être exécutée par les moyens d'exécution, la commande AT est retransmise uniquement à l'application cliente de tâche n°2 ;
- étape "7" : la commande AT est expédiée par l'application d'interface de niveau 2, qui appelle, au sein de l'application cliente de tâche n°2, la fonction source ("wm_apmAppliParser_level2") de traitement d'un message provenant de l'application cliente de tâche n°1, paramétrée ici notamment par un message qui contient la commande AT et qui indique qu'il s'agit de la commande AT "originale". Cette fonction source est présentée en détail dans la suite de la description ;
- étape "8" : au sein de l'application cliente de tâche n°2, la fonction source de traitement traite la commande AT.

Ce traitement consiste par exemple à renvoyer la commande AT vers les moyens d'exécution compris dans l'application cliente de tâche n°1 (selon le mécanisme correspondant au premier cas décrit ci-dessus). Il peut également consister en la fourniture arbitraire d'une réponse par l'application cliente de tâche n°2 elle-même, sans que la commande AT soit exécutée. Dans ce cas, l'application cliente de tâche n°2 tient par exemple compte d'au moins une information relative à la commande AT concernée (type de commande, nature du ou des paramètres, etc). D'une façon générale, quel que soit le traitement effectué, on comprend que l'application cliente de tâche n°2 "filtre" la commande AT.

On présente maintenant la troisième variante du mécanisme d'aiguillage et de traitement des commandes AT, qui permet à l'application cliente de tâche n°2 d'espionner les commandes AT provenant de l'application cliente externe.

Le fonctionnement de cette troisième variante du mécanisme d'aiguillage et de traitement des commandes AT peut aussi être résumé en deux phases successives, à savoir:
- une phase préalable de sélection, par l'application cliente externe, de la (troisième) politique d'aiguillage de commandes AT, selon laquelle les commandes AT sont retransmises non seulement à l'application cliente de tâche n°2 mais aussi aux moyens d'exécution compris dans l'application cliente de tâche n°1, et
- une phase de traitement, selon la (troisième) politique d'aiguillage de commandes sélectionnée, des commandes AT envoyées par l'application cliente externe.

Le fonctionnement de cette troisième variante diffère de celui de la seconde variante essentiellement en ce que :
- lors de l'étape "1" de la phase préalable, l'application cliente de tâche n°2 sélectionne la troisième (et non pas la seconde) politique d'aiguillage de commandes AT ;
- lors de l'étape "6" de la phase de traitement, la commande AT est transmise aux moyens d'exécution et une copie de cette commande AT est transmise à l'application cliente de tâche n°2 ;
- lors de l'étape "8" de la phase de traitement, au sein de l'application cliente de tâche n°2, la fonction source de traitement traite la copie de la commande AT ;
- la phase de traitement comprend en outre une étape "7"', au cours de laquelle les moyens d'exécution compris dans l'application cliente de tâche n°1 exécutent la commande AT.

On présente maintenant la seconde variante du mécanisme d'aiguillage et de traitement des réponses AT, qui permet à l'application cliente de tâche n°2 de filtrer les réponses AT destinées à l'application cliente de tâche n°1.

Le fonctionnement de cette seconde variante du mécanisme d'aiguillage et de traitement des réponses AT peut aussi être résumé en deux phases successives, à savoir :
- une phase préalable de sélection, par l'application cliente externe, de la (seconde) politique d'aiguillage de réponses AT, selon laquelle les réponses AT générées par l'application cliente de tâche n°1 sont transmises uniquement à l'application cliente de tâche n°2 ;
- une phase de traitement, selon la (seconde) politique d'aiguillage de réponses sélectionnée, des réponses AT générées par l'application cliente de tâche n°1.

La phase préalable de sélection de la seconde politique d'aiguillage de réponses AT comprend les étapes suivantes :
- étape "1" : l'application cliente de tâche n°2 appelle une fonction source ("wm_atRspPreParserSubscribe_level2") d'inscription auprès de l'application cliente de tâche n°1 à un service d'aiguillage de réponses AT (ou "response pre-parsing service en anglais), avec un paramètre de cette fonction d'inscription qui indique le choix de la seconde politique d'aiguillage de réponses AT. Cette fonction source est présentée en détail dans la suite de la description ;
- étape "2" : l'application d'interface de niveau 2 6e appelle, au sein de l'application cliente de tâche n°1, la ou les fonction(s) d'exécution appropriée(s), dite(s) fonction d'enregistrement de l'inscription au service d'aiguillage de réponses AT ;
- étape "3" : l'application cliente de tâche n°1 établit l'inscription demandée par l'application cliente de tâche n°2, via l'application d'interface de niveau 2.

Dans un seul souci de simplification, on suppose dans la suite de la description que la ou les fonction(s) d'enregistrement de l'inscription au service d'aiguillage de réponse AT sont comprises, au sein de l'application cliente de tâche n°1, dans les moyens d'exécution de commandes AT. Egalement dans un seul souci de simplification, on suppose dans la suite de la description que les moyens d'aiguillage de réponses (discutés ci-après) sont compris, au sein de l'application cliente de tâche n°1, dans les moyens d'exécution de commandes AT.

La phase de traitement des réponses AT comprend les étapes suivantes :
- étape "4" : l'application cliente externe envoie une commande AT à l'application cliente de tâche n°1 ;
- étape "5" : la liaison série transmet la commande AT aux moyens d'exécution compris dans l'application cliente de tâche n°1 ;
- étape "6" : les moyens d'exécution exécutent la commande AT et génère une réponse AT;
- étape "7" : des moyens d'aiguillage de réponses, compris dans les moyens d'exécution et fonctionnant selon la seconde politique d'aiguillage de réponses AT (sélectionnée lors de la phase préalable), envoient la réponse AT à l'application cliente de tâche n°2 ;
- étape "8" : la réponse AT est expédiée par l'application d'interface de niveau 2, qui appelle, au sein de l'application cliente de tâche n°2, la fonction source ("wm_apmAppliParser_level2") de traitement d'un message provenant de l'application cliente de tâche n°1, paramétrée ici notamment par un message qui contient la réponse AT et qui indique qu'il s'agit de la réponse AT "originale" ;
- étape "9" : au sein de l'application cliente de tâche n°2, la fonction source de traitement traite la réponse AT. On peut parler ici de "filtrage" des réponses AT par l'application cliente de tâche n°2.

On présente maintenant, en relation avec la figure 7, la troisième variante du mécanisme d'aiguillage et de traitement des réponses AT, qui permet à l'application cliente de tâche n°2 d'espionner les réponses AT destinées à l'application cliente de tâche n°1.

Le fonctionnement de cette troisième variante du mécanisme d'aiguillage et de traitement des réponses AT peut aussi être résumé en deux phases successives, à savoir:
- une phase préalable de sélection, par l'application cliente externe, de la (troisième) politique d'aiguillage de réponses AT, selon laquelle les réponses AT sont retransmises non seulement à l'application cliente de tâche n°1 mais aussi à l'application cliente de tâche n°2, et
- une phase de traitement, selon la (troisième) politique d'aiguillage de réponses sélectionnée, des réponses AT générées par l'application cliente de tâche n°1.

Le fonctionnement de cette troisième variante diffère de celui de la seconde variante essentiellement en ce que :
- lors de l'étape "1" de la phase préalable, l'application cliente de tâche n°2 sélectionne la troisième (et non pas la seconde) politique d'aiguillage de réponses AT;
- lors de l'étape "7" de la phase de traitement, la réponse AT est transmise à l'application cliente externe et une copie de cette réponse AT est transmise vers l'application cliente de tâche n°2 ;
- lors de l'étape "9" de la phase de traitement, au sein de l'application cliente de tâche n°2, la fonction source de traitement traite la copie de la réponses AT ;
- la phase de traitement comprend en outre une étape "8"', au cours de laquelle la réponse est envoyée à travers la liaison série, et une étape "9"' au cours de laquelle l'application cliente externe reçoit et traite la réponse.

Dans une **variante de la nouvelle technique selon l'invention de pilotage** du module de radiocommunication (dont un mode de réalisation particulier a été décrit ci-dessus), l'application cliente de tâche n°2 6c n'est pas "monobloc", mais "distribuée" ("multiblocs"). Elle comprend une sous-application cliente principale 7 combinée avec une ou plusieurs sous-application(s) cliente(s) secondaire(s) 8. Chaque sous-application cliente secondaire 8 est une sous-application esclave, en terme de lancement et d'arrêt, de la sous-application cliente principale 7 qui l'appelle. Mais une fois démarrée, la sous-application cliente secondaire 8 a accès, indépendamment de la sous-application cliente principale 7, à l'ensemble des fonctions d'exécution offertes par la sous-application cliente de tâche n°1 (via un mécanisme, détaillé par la suite, d'abonnement à un service d'envoi de messages provenant de l'application cliente de tâche n°1).

Chaque sous-application cliente secondaire est un "bloc élémentaire" qui peut être fourni au client par un développeur tiers (typiquement le fabriquant du module de radiocommunication). Ainsi, le travail de développement du client est réduit puisqu'il ne développe que la sous-application cliente principale, qui sous-traite certains traitements en faisant appel à une ou plusieurs sous-application(s) cliente(s) secondaire(s).

On notera que le client peut également développer lui-même des sous-applications clientes secondaires, s'il souhaite pouvoir les appeler dans différentes sous-applications clientes principales qu'il développe.

On présente ci-après successivement la mise en oeuvre de plusieurs mécanismes dans le cadre de la variante précitée de la nouvelle technique selon l'invention de pilotage du module de radiocommunication.

On présente tout d'abord un mécanisme de lancement de la sous-application cliente principale 7 et d'abonnement de celle-ci à un service d'envoi de messages provenant de l'application cliente de tâche n°1. Le fonctionnement de ce mécanisme peut être résumé ainsi :
- étape "1" : l'application cliente de tâche n°1 détecte la présence d'une sous-application cliente principale et la lance ;
- étape "2" : le lancement de la sous-application cliente principale se fait via l'application d'interface de niveau 2, qui appelle au sein de la sous-application cliente principale une fonction source d'initialisation de la sous-application cliente principale. Cette fonction source ("wm_apmAppliInit2_level1") est présentée en détail dans la suite de la description ;
- étape "3" : au sein de la sous-application cliente principale, la fonction source "wm_apmAppliInit2_level1" initialise la sous-application cliente principale. Comme expliqué en détail dans les étapes suivantes ("4" à "6"), cette initialisation consiste notamment à donner à l'application cliente de tâche n°1 l'adresse d'une fonction source (par exemple "wm_apmAppliParser_level2") permettant à la sous-application cliente principale de recevoir des messages provenant de l'application cliente de tâche n°1 ;
- étape "4" : la sous-application cliente principale fait appel à une fonction source d'abonnement à un service d'envoi de messages provenant de l'application cliente de tâche n°1 ("wm_osMsgParserSubscribe_level2"). Cette fonction source est présentée en détail dans la suite de la description ;
- étape "5" : l'application d'interface de niveau 2 appelle, au sein de l'application cliente de tâche n°1, la ou les fonction d'exécution appropriée(s), dite(s) fonction d'enregistrement de l'abonnement (ou inscription) au service d'envoi des messages destinés à la sous-application cliente principale ;
- étape "6" : l'application cliente de tâche n°1 établit l'inscription demandée, via l'application d'interface de niveau 2, par la sous-application cliente principale.

Selon une variante, l'application cliente de tâche n°1 fait appel à la fonction source "wm_osMsgParserSubscribe_level2" quand elle le souhaite (indépendamment de l'exécution de la fonction source d'initialisation).
On présente maintenant un mécanisme de lancement de la sous-application cliente secondaire 8 et d'abonnement de celle-ci à un service d'envoi de messages provenant de l'application cliente de tâche n°1.
Le fonctionnement de ce mécanisme peut être résumé comme suit :
- étape "1" : la sous-application cliente principale, après réception d'un message dans sa fonction source "wm_apmAppliParser_level2()", appelle une fonction source de la sous-application cliente secondaire, à savoir la fonction source d'initialisation de l'application cliente secondaire 8 ("wm_app2Pipe_level2(init)"). Cette fonction source (qui doit être connue de la sous-application cliente principale est présentée en détail dans la suite de la description ;
- étape "2" : au sein de la sous-application cliente secondaire, la fonction source "wm_app2Pipe_level2(init)" initialise la sous-application cliente secondaire. Comme expliqué en détail dans les étapes suivantes ("3" à "5"), cette initialisation consiste notamment à donner à l'application cliente de tâche n°1 l'adresse d'une fonction source (par exemple "wm_app2MsgParser_level2") permettant à la sous-application cliente secondaire de recevoir des messages provenant de l'application cliente de tâche n°1 ;
- étape "3" : la sous-application cliente secondaire fait appel à la fonction source d'abonnement à un service d'envoi de messages provenant de l'application cliente de tâche n°1 ("wm_osMsgParserSubscribe_level2"). Cette fonction source est présentée en détail dans la suite de la description ;
- étape "4" : l'application d'interface de niveau 2 appelle, au sein de l'application cliente de tâche n°1, la ou les fonction d'exécution appropriée(s), dite(s) fonction d'enregistrement de l'abonnement (ou inscription) au service d'envoi des messages destinés à la sous-application cliente secondaire ;
- étape "5" : l'application cliente de tâche n°1 établit l'inscription demandée, via l'application d'interface de niveau 2 6e, par la sous-application cliente secondaire 8.

Après qu'elle a été ainsi lancée, la sous-application cliente secondaire 8 effectue sa fonction (ensemble de traitements ou tâches), de façon autonome par rapport à la sous-application cliente principale 7. Comme expliqué en détail ci-après, elle a pour cela à sa disposition l'ensemble des fonctions d'exécution offertes par l'application cliente de tâche n°1.

Selon une variante, la sous-application cliente secondaire 8 fait appel à la fonction source "wm_osMsgParserSubscribe_level2" quand elle le souhaite (indépendamment de l'exécution de la fonction source d'initialisation de la sous-application cliente secondaire).

On notera que la fonction source d'initialisation de la sous-application cliente secondaire peut comprendre au moins un paramètre permettant la mise en oeuvre d'un mécanisme de dialogue entre la sous-application cliente principale et la sous-application cliente secondaire. Cette caractéristique de l'invention est décrite en détail dans la suite de la description.
On présente maintenant un mécanisme d'arrêt de la sous-application cliente secondaire 8 et de désabonnement de celle-ci au service d'envoi de messages provenant de l'application cliente de tâche n°1.
Le fonctionnement de ce mécanisme peut être résumé comme suit :
- étape "1" : la sous-application cliente principale 7, après réception d'un message dans sa fonction source "wm_apmAppliParser_level2()", appelle une fonction source de la sous-application cliente secondaire 8, à savoir la fonction source d'arrêt de la sous-application cliente secondaire ("wm_app2Pipe_level2(stop)"). Cette fonction source (qui doit être connue de la sous-application cliente principale) est présentée en détail dans la suite de la description ;
- étape "2" : au sein de la sous-application cliente secondaire 8, la fonction source "wm_app2Pipe_level2(stop)" effectue les traitements d'arrêt de la sous-application cliente secondaire. Comme expliqué en détail dans les étapes suivantes ("3" à "5"), ces traitements consistent notamment pour la sous-application cliente secondaire à se désabonner du service d'envoi de messages venant de l'application cliente de tâche n°1 ;
- étape "3" : la sous-application cliente secondaire fait appel à la fonction source de désabonnement au service d'envoi de messages provenant de l'application cliente de tâche n°1 ("wm_osMsgParserUnsubscribe_level2"). Cette fonction source est présentée en détail dans la suite de la description ;
- étape "4" : l'application d'interface de niveau 2 appelle, au sein de l'application cliente de tâche n°1, la ou les fonction d'exécution appropriée(s), dite(s) fonction désabonnement (ou de retrait de l'inscription) au service d'envoi des messages destinés à la sous-application cliente secondaire ;
- étape "5" : l'application cliente de tâche n°1 établit l'arrêt de l'inscription, demandé, via l'application d'interface de niveau 2, par la sous-application cliente secondaire. On présente maintenant un exemple de traitements pouvant être effectués par la sous-application cliente secondaire, pour décharger la sous-application cliente principale. Dans cet exemple, on suppose que :

- l'application cliente de tâche n°2 joue le rôle d'une application cliente de pilotage ;
- les traitements consistent en l'envoi par la sous-application cliente secondaire 8 d'une commande et la réception de la réponse correspondante ;
- la sous-application cliente secondaire 8 a été initialisée et qu'elle s'est abonnée au service d'envoi de messages venant de l'application cliente de tâche n°1 ;
- lors de l'abonnement, la sous-application cliente secondaire 8 a donné "wm_app2MsgParser_level2()" comme fonction source de réception des messages.
Le fonctionnement de cet exemple de traitements peut être résumé comme suit :
- étape "1" : la sous-application secondaire 8 appelle une fonction source d'envoi vers l'application cliente de tâche n°1 d'une ou plusieurs commandes AT, afin que cette dernière les exécute (et effectue donc un "traitement de commandes AT"). Cette fonction source ("wm_atSendCommand_level2") est présentée en détail dans la suite de la description ;
- étape "2" : l'application d'interface de niveau 2 6e appelle, au sein des moyens d'exécution compris dans l'application cliente de tâche n°1, la ou les fonction d'exécution appropriée(s), dite(s) fonction(s) de traitement des commandes AT ;
- étape "3" : les moyens d'exécution 4 exécutent la ou les commande(s) AT ;
- étape "4" : après exécution, les moyens d'exécutions 4 envoient la ou les réponse(s) AT à la sous-application cliente secondaire 8 (si la fonction source d'envoi a été paramétrée en ce sens) ;
- étape "5" : cette ou ces réponse(s) est(sont) envoyée(s), à travers l'application d'interface de niveau 2, vers la sous-application cliente secondaire 8 ;
- étape "6" : au sein de la sous-application cliente secondaire, la fonction source de réception et traitement "wm_app2MsgParser_level2()" traite la réponse. Cette fonction source est celle que la sous-application cliente secondaire a donnée lors de l'inscription pour la réception des messages venant de l'application cliente de tâche n°1. Un paramètre de cette fonction source de réception et traitement est le message qui contient la ou les réponse(s) précitée(s).

On discute maintenant, toujours dans le cadre de la variante de la nouvelle technique selon l'invention de pilotage du module de radiocommunication, le cas où l'application cliente de tâche n°2 joue le rôle d'une application de supervision. Dans ce cas, la sous-application cliente secondaire 8 peut par exemple effectuer les traitements suivants :
- mise en oeuvre d'un mécanisme d'aiguillage de commandes, permettant à la sous-application cliente secondaire 8 de filtrer ou espionner les commandes provenant de l'application cliente externe ;
- mise en oeuvre d'un mécanisme d'aiguillage de réponses, permettant à la sous-application cliente secondaire 8 de filtrer ou espionner les réponses destinées à l'application cliente externe.

On ne décrit pas ci-après en détail ces exemples de traitements effectués par la sous-application cliente secondaire. On notera toutefois qu'un texte explicatif relatif à la mise en oeuvre par la sous-application cliente secondaire des deux mécanismes d'aiguillage (de commandes et de réponses respectivement) précités, peuvent être obtenus en effectuant la transposition suivante :
- on part du texte explicatif ci-dessus dans le cas où l'application cliente de tâche n°2 est "monobloc", et
- on considère que c'est la sous-application cliente secondaire qui est impliquée (au lieu de l'application cliente de tâche n°2).

On trouvera en **Annexe 1** une présentation détaillée de certaines fonctions sources de niveau 1, sur lesquelles sont basées l'application cliente de démarrage 6a et les applications clientes de tâche 6b, 6c.

On trouvera en **Annexe 2** une présentation détaillée de certaines fonctions sources de niveau 2 sur lesquelles sont basées l'application cliente de tâche n°2 et les sous-applications clientes principale et secondaire (dans le cas de la variante), introduites dans le cadre de la nouvelle technique selon l'invention de pilotage du module de radiocommunication (voir description ci-dessus en relation avec la figure 8).

### ANNEXE 1 :

### Présentation détaillée de certaines fonctions sources de niveau 1, sur lesquelles sont basées l'application cliente de démarrage et les applications clientes de tâche.

Remarque préliminaire : la liste qui suit n'est pas exhaustive. On notera que tous les exemples de fonctions source de niveau 1, associées aux applications clientes de tâche, sont relatifs au bloc "OS". Même si elles n'apparaissent pas dans la liste ci-dessous, il est clair qu'il existe de nombreuses fonctions source de niveau 1, associées aux applications clientes de tâche, qui sont relatifs aux blocs "HWL" et "couche 3 GSM" (un exemple de fonction relative à chacun de ces deux blocs peut être trouvé dans les explications ci-dessus données en relation avec les figures.

### A1) "wm apmGlobalInit level1()"

Fonction source de niveau 1 de démarrage global, dont le rôle est de fournir au logiciel principal 3 des informations lui permettant d'initialiser et de dialoguer avec chaque application cliente de tâche 6b, 6c.

### A2) "apmAppliInit n°x level1()"

Fonction source de niveau 1 d'initialisation, permettant d'initialiser une application cliente de tâche n° x. Cette fonction est appelée une fois lors de l'initialisation de l'application cliente de tâche concernée.

### Nom exact :

void AppliInit1 (wm_apmInitType_e InitType);

### Paramètres :

InitType:
indique l'item qui déclenche l'initialisation. Les valeurs correspondantes sont : 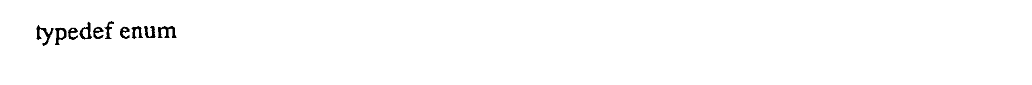 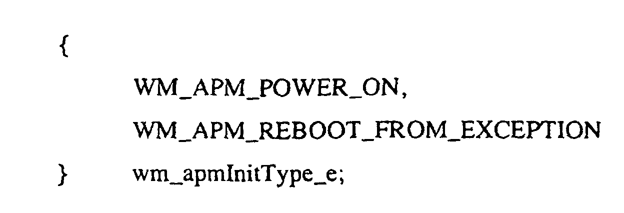 WM_APM_POWER_ON signifie qu'un allumage normal s'est produit.
WM_APM_REBOOT_FROM_EXCEPTION signifie que le module a été redémarré après une exception.

### A3) "apmAppliParser n°x level1()"

Fonction source de niveau 1 de réception et traitement d'un message provenant du logiciel principal. Cette fonction est appelée à chaque fois qu'une application cliente reçoit un message provenant du logiciel principal.

### Nom exact :

bool AppliParser1(wm_apmMsg_t * Message);

### Paramètres :

### Message:

La structure de "*Message*" dépend de son type:

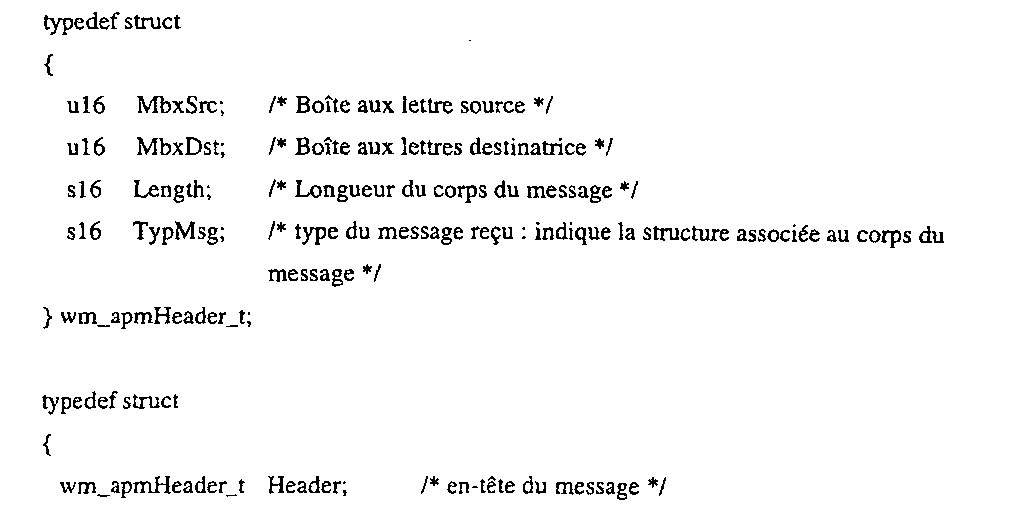

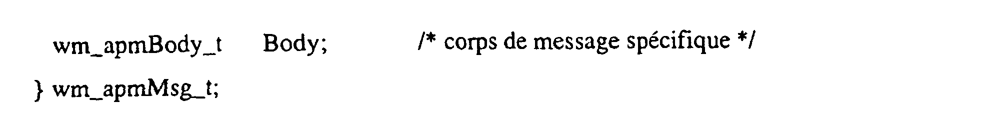

TypMsg peut prendre les valeurs suivantes :
WM_OS_TIMER : signifie que le message est envoyé à l'expiration d'une temporisation.
WM_HWL_xxx ...
WM_L3xxx ...

### Valeurs retournées :

Le paramètre de retour indique si le message a été pris en compte (vrai) ou non (faux).

### A4) "Informations de tâches globales"

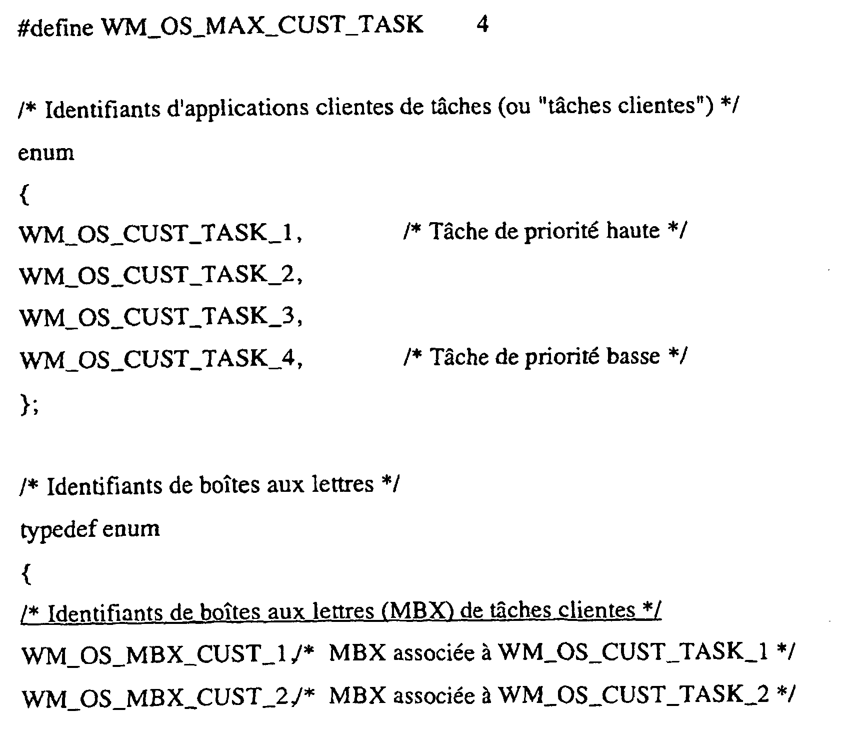

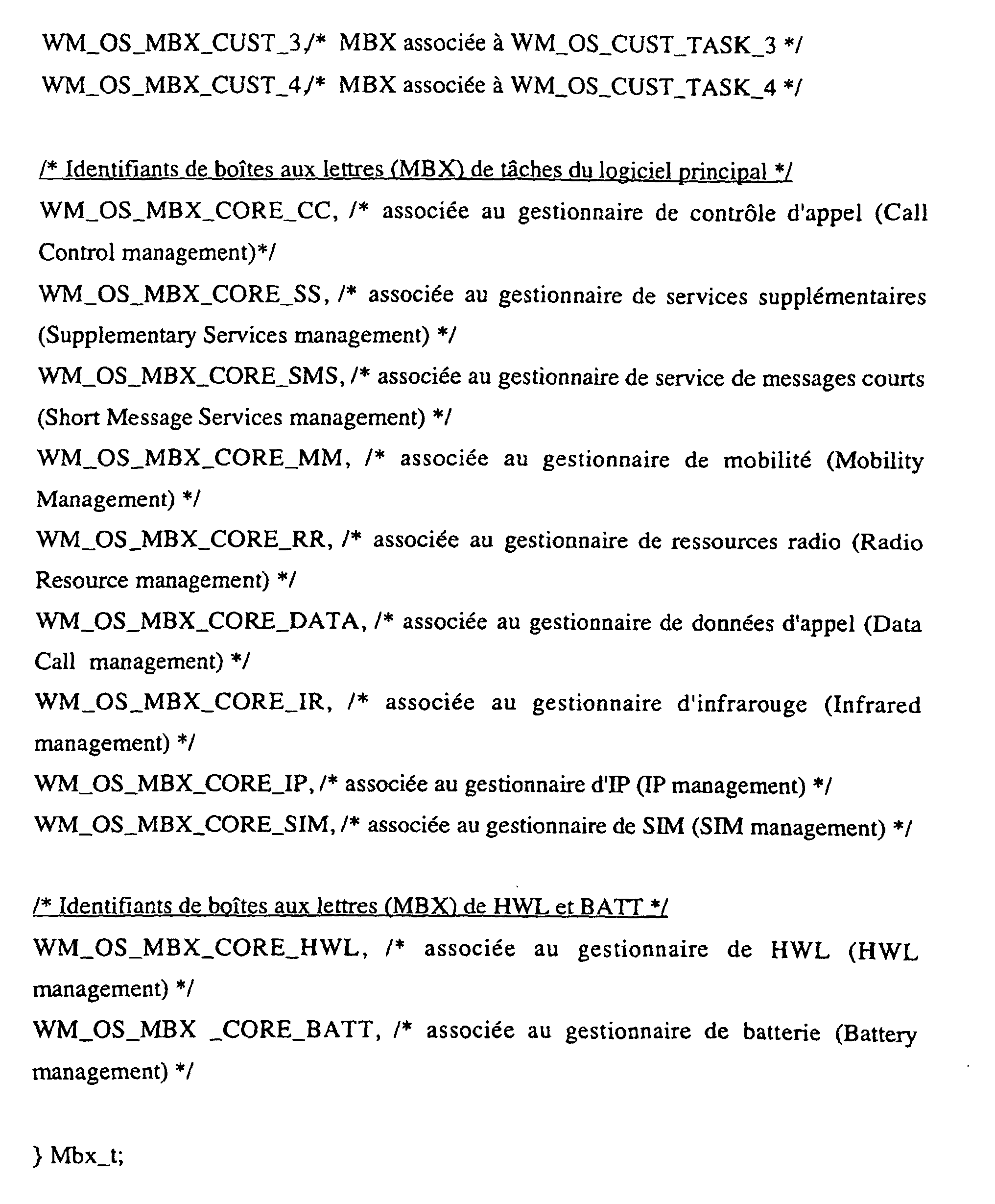

### A5) "wm osSendMsg level1()"

Fonction source de niveau 1 d'envoi d'un message (préalablement alloué et rempli) vers une autre application cliente de tâche, via l'application d'interface et le logiciel principal.

### Nom exact :

bool wm_osSendMsg (void * *Msg* );

### Paramètres :

Msg : le message à envoyer

### Valeurs retournées :

Le paramètre de retour indique si le message a été envoyé (vrai) ou non (faux).

### A6) "wm osStartTimer level1"

Fonction source de niveau 1 de déclenchement d'une temporisation dans le logiciel principal.

### A7) "wm osStopTimer level1"

Fonction source de niveau 1 d'arrêt d'une temporisation préalablement déclenchée dans le logiciel principal.

### A8) "wm osDebugTrace level1"

Fonction source de niveau 1 de suivi de la mise au point

### A9) "wm osDebugFatalError level1"

Fonction source de niveau 1 d'indication d'une erreur fatale et de redémarrage

### A10) "wm osWriteFlashData level1"

Fonction source de niveau 1 d'écriture de données dans une mémoire comprise dans le module de radiocommunication

### A11) "wm osReadFlashData level1"

Fonction source de niveau 1 de lecture de données dans une mémoire comprise dans le module de radiocommunication

### A12) "wm osGetLenFlashData level1"

Fonction source de niveau 1 de fourniture de la longueur de données stockées dans une mémoire comprise dans le module de radiocommunication

### A13) "wm osDeleteFlashData level1"

Fonction source de niveau 1 de suppression de données stockées dans une mémoire comprise dans le module de radiocommunication

### A14) "wm osGetAllowedMemoryFlashData level1"

Fonction source de niveau 1 de fourniture de la quantité de mémoire allouée au sein d'une mémoire comprise dans le module de radiocommunication

### A15) "wm osGetFreeMemoryFlashData level1"

Fonction source de niveau 1 de fourniture de la quantité de mémoire libre au sein d'une mémoire comprise dans le module de radiocommunication

### A16) "wm osGetMemoryFlashData level1"

Fonction source de niveau 1 de demande d'allocation de mémoire au sein d'une mémoire comprise dans le module de radiocommunication

### A17) "wm osReleaseMemoryFlashData level1"

Fonction source de niveau 1 de demande de libération de mémoire au sein d'une mémoire comprise dans le module de radiocommunication.

### A18) "wm MbxSubscribe"

Fonction source de niveau 1 d'inscription à un service de boîte aux lettres géré par le logiciel principal, permettant à une application cliente de tâche de se voir affecter une boîte aux lettres qui lui est propre et dans laquelle elle souhaite recevoir des informations provenant d'au moins une source prédéterminée.

Par défaut, toutes les informations sont envoyées à WM_OS_CUST_MBX_1, c'est-à-dire à la boîte aux lettres associées à WM_OS_CUST_TASK_1 (l'application cliente de tâche n°1).

### Nom exact :

bool wm_MbxSubscribe (wm_apmMbxSubscription_t *TabMbxSubs );

### Paramètres :

### TabMbsSubs:

Table contenant les entités et leurs boîtes aux lettres associées.

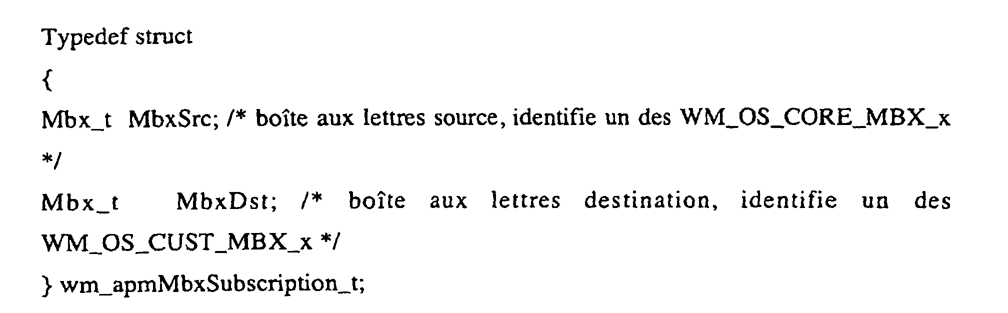

### Valeurs retournées :

Le paramètre de retour indique si l'inscription a été prise en compte (vrai) ou non (faux).

### ANNEXE 2 :

### Présentation détaillée de certaines fonctions sources de niveau 2,

sur lesquelles sont basées l'application cliente de tâche n°2 et les sous-applications clientes principale et secondaire (dans le cas de la variante), introduites dans le cadre de la nouvelle technique selon l'invention de pilotage du module de radiocommunication.

Remarque préliminaire : la liste qui suit n'est pas exhaustive.

### A1) "wm osMsgParserSubscribe level2()"

Fonction d'inscription de l'application cliente de tâche n°2 ou d'une sous-application cliente (principale ou secondaire) auprès de l'application cliente de tâche n°1 à un service de réception des messages venant de l'application cliente de tâche n°1. L'application cliente de tâche n°1 mémorise cette fonction et s'en servira chaque fois qu'il a quelque chose à transmettre à la sous-application cliente (principale ou secondaire) concernée.

### Nom exact :

void wm_osMsgParserSubscribe_level2( void (* SubscribeFunction)(wm_apmMsg_t *) );

### Paramètres :

SubscribeFunction (wm_apmMsg_t *) : fonction offerte par l'appelant (application cliente de tâche n°2 ou sous-application cliente (principale ou secondaire)) pour que le logiciel principal puisse lui envoyer des messages. Un prototype de cette fonction offerte est détaillée ci-après ("wm_apmAppliParser_level2" pour la sous-application cliente principale, ou "wm_app2MsgParser_level2" pour la sous-application cliente secondaire).

### Valeur retournée :

La paramètre de retour indique si l'abonnement a été pris en compte (VRAI) ou non (FAUX).

### A2) "wm osMsgParserUnsubscribe level2()"

Fonction d'arrêt de l'inscription d'une application cliente de tâche n°2 ou d'une sous-application cliente (principale ou secondaire), auprès de l'application cliente de tâche n°1, à un service de réception des messages venant de l'application cliente de tâche n°1. L'application cliente de tâche n°1 oublie la fonction précédemment mémorisée.

### Nom exact :

bool wm_osMsgParserUnsubscribe_level2 ( void (* SubsFunction)(wm_apmMsg_t *));

### Paramètres :

SubsFunction(wm_apmMsg_t *) : fonction offerte par l'appelant (application cliente de tâche n°2 ou sous-application cliente (principale ou secondaire)) pour que l'application cliente de tâche n°1 puisse lui envoyer des messages. Cette fonction doit être la même que celle donnée lors de l'abonnement à ce service, sinon l'arrêt de l'abonnement ne sera pas pris en compte.

### Valeur retournée :

La paramètre de retour indique si l'arrêt de l'abonnement a été pris en compte (VRAI) ou non (FAUX)

### A3) "wm app2Pipe level2 ( FunctionType fonction,...)"

Prototype de la fonction que doit offrir la sous-application cliente secondaire à la sous-application cliente principale pour pouvoir dialoguer avec elle. Cette fonction est à arguments variables, le nombre et le type des arguments dépend du premier paramètre « fonction ».

### Nom exact :

void wm_app2Pipe_level2 ( FunctionType fonction, ... ) ;

### Paramètres :

fonction : fonction demandée. Elle implique le nombre et le type des paramètres suivants. Certaines valeurs sont réservées (par exemple de 0 à 127), les autres (par exemple de 128 à 255) sont laissées libres pour utilisation par les dialogues particuliers entre la sous-application cliente principale et la sous-application cliente secondaire.

### A3-1) Paramètres variables pour fonction = WM_APP_FUNCTION_INIT :

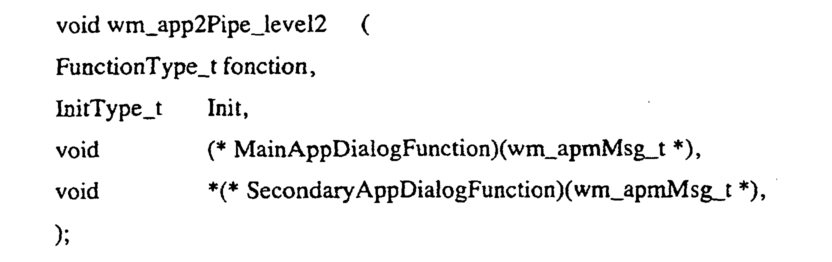

La sous-application secondaire doit s'initialiser et faire son traitement.
InitType_t Init : le type d'initialisation (APM_INIT_POWER_ON ou APM_INIT_REBOOT)
void (* MainAppDialogFunction)(wm_apmMsg_t *) : adresse de la fonction que doit utiliser la sous-application cliente secondaire pour envoyer des messages à la sous-application cliente principale. Si une telle fonction n'est pas souhaitée par la sous-application cliente principale, celle-ci passe une valeur NULL.
void *(* SecondaryAppDialogFunction)(wm_apmMsg_t *) : La souis-application cliente secondaire doit donner l'adresse de la fonction qu'elle offre à la sous-application cliente principale. Si la sous-application cliente secondaire n'offre pas cette fonction, elle doit positionner la valeur à NULL.

### A3-2) Paramètres variables pour fonction = WM_APP_FUNCTION_STOP :

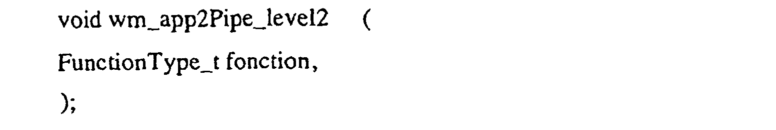

La sous-application cliente secondaire doit arrêter ses traitements, se désabonner de tous ses abonnements, et libérer l'ensemble des ressources utilisées.

### A4) "wm apmAppliParser level2"

Prototype de la fonction source que doit proposer l'application cliente de tâche n°2 pour recevoir des messages venant de l'application cliente de tâche n°1. Le message formant paramètre de cette fonction de traitement (aussi dite "de réception") contient notamment une commande AT ou une réponse à une commande AT.

On notera que tout ce qui est décrit ci-dessous s'applique également à la fonction source, dans laquelle la sous-application cliente principale ou la sous-application cliente secondaire souhaite recevoir des messages provenant de l'application cliente de tâche n°1. Seul change le nom de la fonction elle-même (par exemple "wm_app2MsgParser_level2" au lieu de "wm_apmAppliParser_level2").

### Nom exact :

bool wm_apmAppliParser_level2 (wm_apmMsg_t * *Message*);

### Paramètres

### Message

La structure du message change avec chaque type de message reçu :

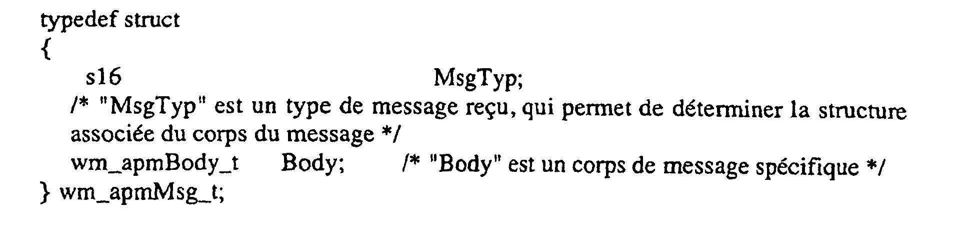

### Valeurs de "MsgTyp" :

### WM_AT_SEND_RSP

Le message contient une réponse à une commande AT préalablement envoyée à l'application cliente de tâche n°1 par l'application cliente de tâche n°2

### WM_AT_UNSOLICITED

Le message contient une commande AT non sollicitée

### WM_AT_CMD_PRE_PARSER

Le message contient une commande AT envoyée par une application cliente externe, via l'application cliente de tâche n°1

### WM_AT_RSP_PRE_PARSER

Le message contient une réponse AT résultant de l'exécution par l'application cliente de tâche n°1 d'une commande AT provenant d'une application externe.

### WM_OS_TIMER

Le message est envoyé à l'expiration d'une temporisation.

La structure du corps est :

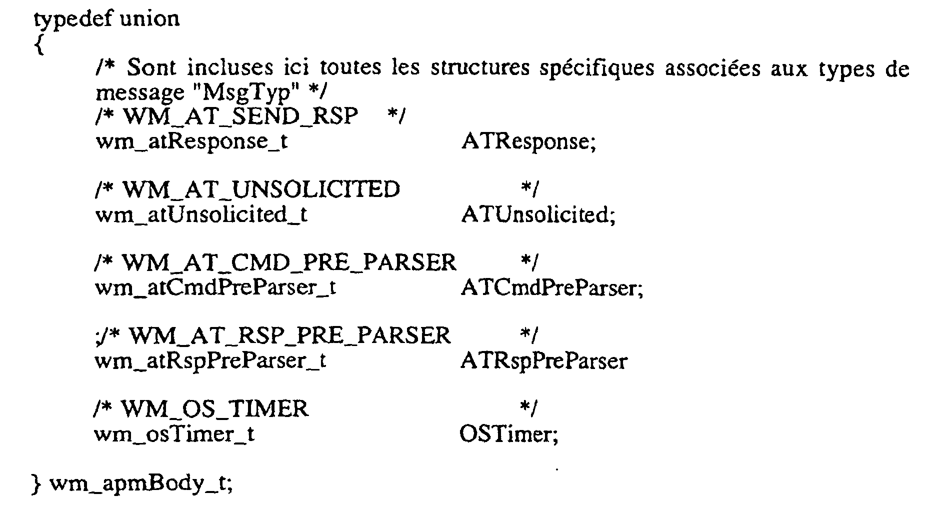

Les sous-structures du corps sont : 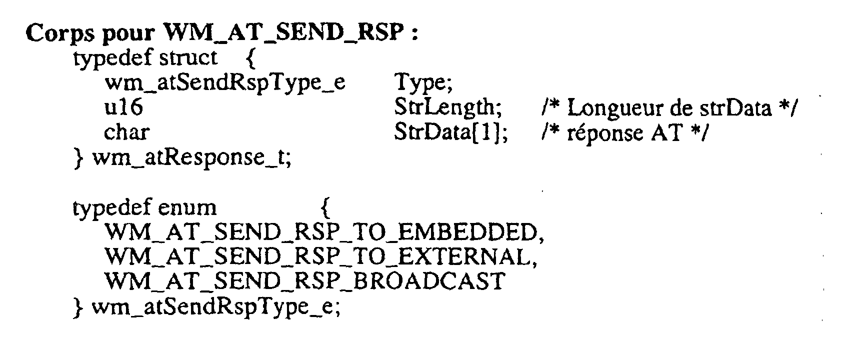 (voir le détail de la fonction "wm_atSendCommand_level2", pour la description de "wm_atSendRspType_e description"). 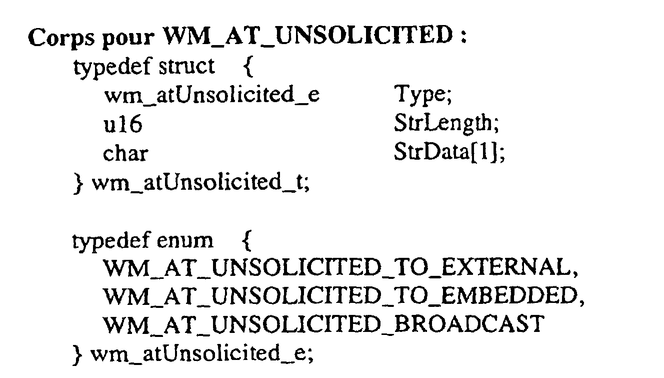 (voir le détail de la fonction "wm_atUnsolicitedSubscription_level2", pour la description de "wm_atUnsolicited_e"). 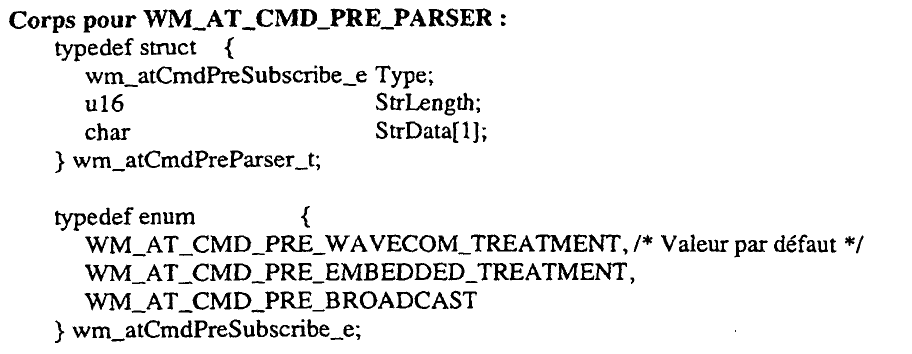 (voir le détail de la fonction "wm_atRspPreParserSubscribe_level2", pour la description de "wm_atCmdPreSubscribe_e"). 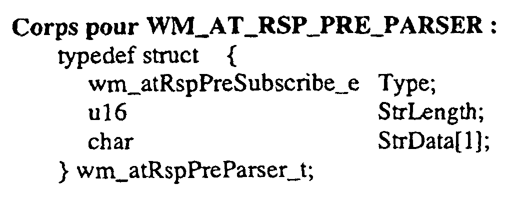 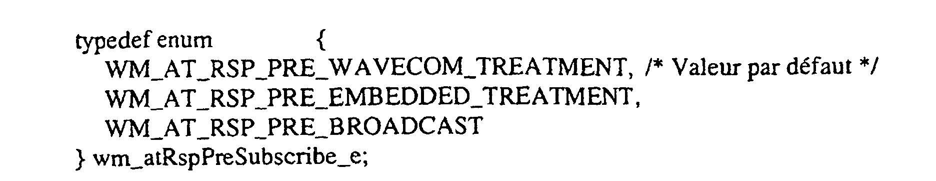 (voir le détail de la fonction "wm_atRspPreParserSubscribe_level2", pour la description de "wm_atRspPreSubscribe_e"). 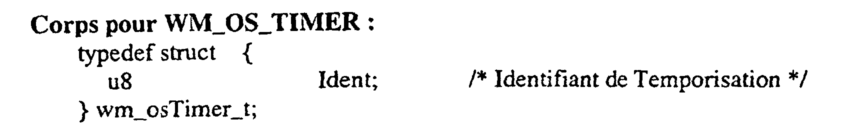 (voir le détail de la fonction "wm_osStartTimer_level2", pour la description de "Ident").

### Valeurs retournées

Le paramètre de retour indique si le message a été traité (VRAI) ou non (FAUX).

### A5) "wm atSendCommand level2"

fonction d'envoi vers l'application cliente de tâche n°1 d'au moins une commande AT, dont un paramètre indique le(s) application(s) destinatrice(s) (à savoir l'application cliente de tâche n°2 (ou la sous-application cliente (principale ou secondaire)) embarquée et/ou l'application cliente externe) de la réponse résultant de l'exécution de cette commande AT.

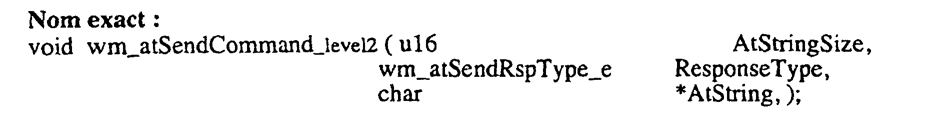

### Paramètres

### AtString

Ce paramètre peut être tout type de chaîne de commandes AT, en caractères ASCII. Plusieurs chaînes peuvent être envoyées en même temps.

### AtStringSize

Taille du paramètre précédent : AtString.

### ResponseType

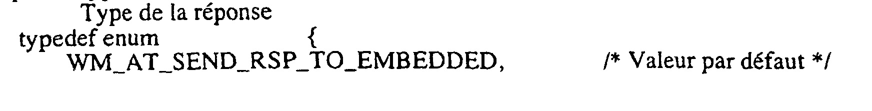

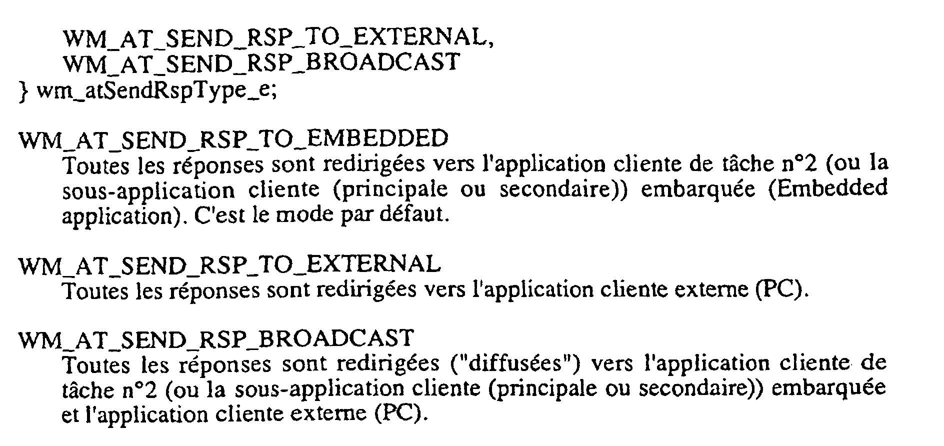

### A6) "wm atUnsolicitedSubscription level2"

fonction d'inscription auprès de l'application cliente de tâche n°1 à un service de réception de commandes AT non sollicitées, dont un paramètre indique vers quelle(s) application(s) destinatrice(s) (à savoir l'application cliente de tâche n°2 (ou la sous-application cliente (principale ou secondaire)) embarquée et/ou l'application cliente externe) doit être redirigée chacune des commandes AT non sollicitées

### Nom exact :

void wm_atUnsolicitedSubscription_level2 (wm_atUnsolicited_e Unsolicited);

### Paramètres

### Unsolicited

Ce paramètre décrit l'action effectuée quand une commande AT non sollicitée arrive.

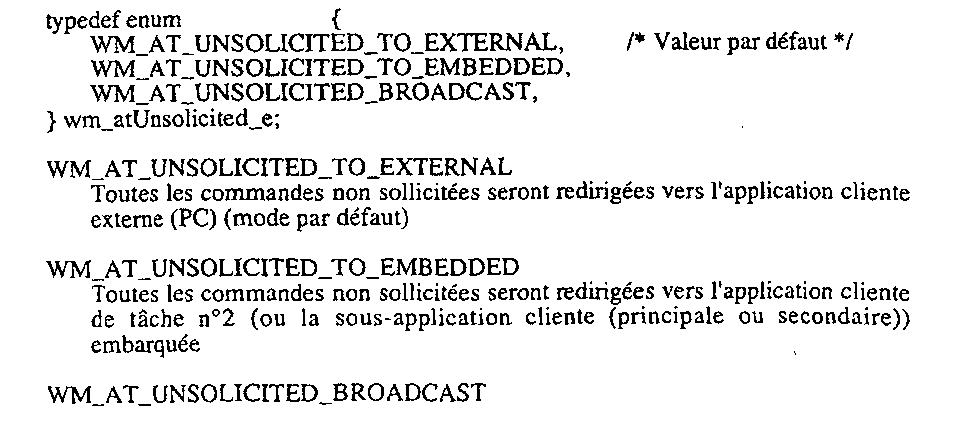

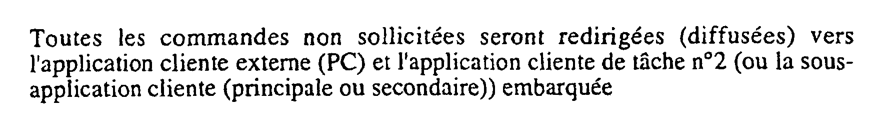

### A7) "wm atCmdPreParserSubscribe level2"

fonction d'inscription auprès de l'application cliente de tâche n°1 à un service d'aiguillage de commandes AT, dont un paramètre indique vers quelle(s) application(s) destinatrice(s) (à savoir l'application cliente de tâche n°2 (ou la sous-application cliente (principale ou secondaire)) embarquée et/ou l'application cliente de tâche n°1) doit être aiguillée chacune des commandes AT provenant d'une application externe.

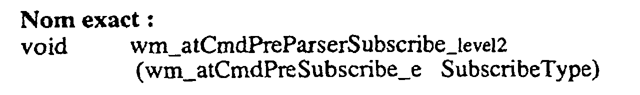

### Paramètres

### SubscribeType

Ce paramètre décrit l'action effectuée quand une commande AT arrive

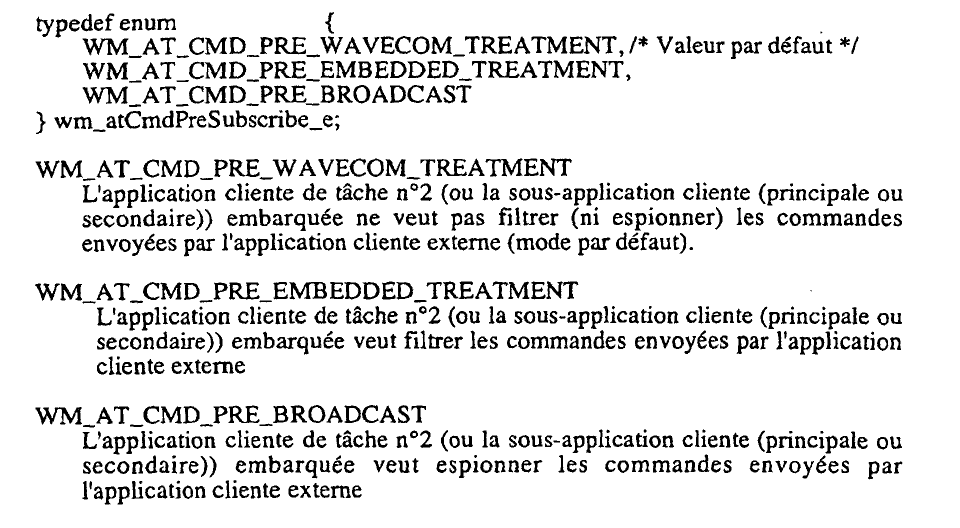

### A8) "wm atRspPreParserSubscribe level2"

fonction d'inscription auprès de l'application cliente de tâche n°1 à un service d'aiguillage de réponses, dont un paramètre indique vers quelle(s) application(s) destinatrice(s) (à savoir l'application cliente de tâche n°2 (ou la sous-application cliente (principale ou secondaire)) embarquée et/ou l'application cliente externe) doit être aiguillée chacune des réponses résultant de l'exécution par l'application cliente de tâche n°1 d'une commande AT provenant d'une application externe.

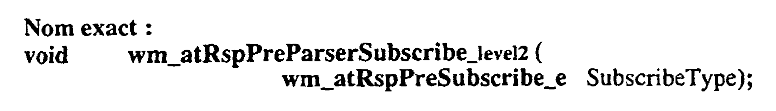

### Paramètres

### SubscribeType

Ce paramètre décrit l'action effectuée quand une commande AT arrive

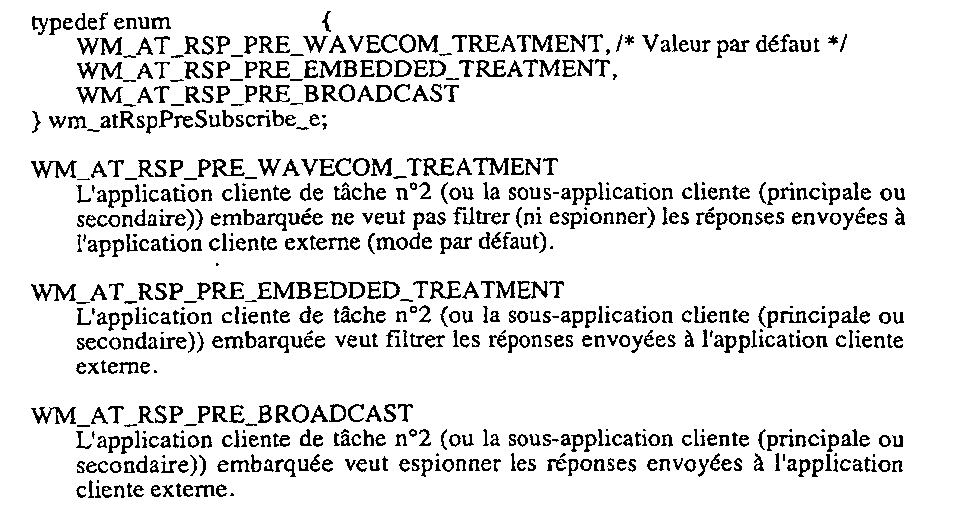

### A9) "wm atSendRspExternalApp level2"

fonction d'envoi vers l'application cliente externe, via l'application cliente de tâche n°1, d'au moins une réponse. L'utilisation de cette fonction n'est possible que si une inscription préalable au service d'aiguillage de réponses a été effectuée, avec aiguillage d'une copie des réponses notamment vers l'application cliente de tâche n°2 (ou la sous-application cliente (principale ou secondaire)) embarquée.

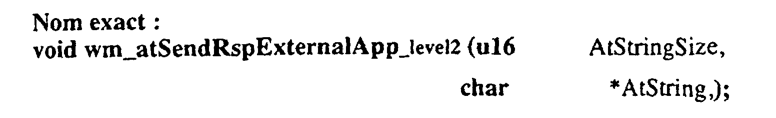

### Paramètres

### AtString

peut être tout type de chaîne de réponses AT, en caractères ASCII

### AtStringSize

Taille du paramètre précédent : AtString

### A10) "DataFlowService level2"

fonction d'émission et/ou réception de données par l'application cliente de tâche n°2 (ou la sous-application cliente (principale ou secondaire)) embarquée, via l'application cliente de tâche n°1, après qu'une communication de données a été établie

## Revendications

1. Module de radiocommunication assurant des fonctions de radiocommunication et destiné à être :
- intégré dans un terminal d'un radiotéléphone, ou
- intégré dans un dispositif nécessitant une fonctionnalité de communication sans fil ou,
- proposé sous forme indépendante, en tant que modem pouvant coopérer avec un équipement tiers,
ledit module de radiocommunication étant du type hébergeant et exécutant un logiciel principal comprenant :
- une application de gestion du système d'exploitation (OS),
- une application de gestion des radiocommunications (couche 3 GSM),
- une application de gestion de périphériques pouvant être connectés au module de radiocommunication (HWL),
**caractérisé en ce que** chacune desdites applications comprises dans le logiciel principal est associée à un jeu de fonctions d'exécution de niveau 1,
**en ce que** ledit module de radiocommunication héberge et exécute en outre au moins un logiciel client comprenant au moins une application cliente, associée à un jeu de fonctions sources de niveau 1,
**et en ce que** ledit logiciel principal et/ou ledit logiciel client comprend(nnent) une application d'interface de niveau 1, permettant l'interfaçage des fonctions sources de niveau 1, associées à ladite application cliente, avec les fonctions d'exécution de niveau 1, associées à ladite application de gestion du système d'exploitation et à au moins une desdites applications de gestion des radiocommunications et de gestion de périphériques, de façon à ouvrir, à ladite au moins une application cliente, l'accès à au moins certaines des fonctionnalités du logiciel principal.

2. Module de radiocommunication selon la revendication 1, **caractérisé en ce que** ladite application d'interface est comprise dans ledit logiciel client.

3. Module de radiocommunication selon l'une quelconque des revendications 1 et 2, **caractérisé en ce que** ledit logiciel client comprend un fichier binaire contenant au moins deux applications clientes.

4. Module de radiocommunication selon l'une quelconque des revendications 1 et 2, **caractérisé en ce que** ledit logiciel client comprend au moins deux fichiers binaires, contenant chacun au moins une application cliente.

5. Module de radiocommunication selon l'une quelconque des revendications 1 à 4, **caractérisé en ce que** ledit logiciel client comprend une application cliente de démarrage global, et au moins une application cliente de tâche réalisant au moins une tâche temps réel,
et **en ce que** le jeu de fonctions sources de niveau 1 associé à l'application cliente de démarrage global comprend une fonction source de niveau 1 de démarrage global, dont le rôle est de fournir au logiciel principal des informations lui permettant d'initialiser et de dialoguer avec chaque application cliente de tâche.

6. Module de radiocommunication selon l'une quelconque des revendications 1 à 5, **caractérisé en ce que** ledit logiciel client comprend au moins deux applications clientes de tâche, associées chacune à un jeu de fonctions sources de niveau 1 et réalisant chacune au moins une tâche temps réel distincte,
et **en ce que** ledit logiciel principal et/ou ledit logiciel client comprend(nnent) des moyens de partage des ressources de calcul entre lesdites applications clientes de tâche, de façon à permettre un fonctionnement multitâches temps réel.

7. Module de radiocommunication selon l'une quelconque des revendications 5 et 6, **caractérisé en ce que** le jeu de fonctions sources de niveau 1 associé à chaque application cliente de tâche comprend une fonction source de niveau 1 d'initialisation, permettant d'initialiser ladite application cliente de tâche.

8. Module de radiocommunication selon la revendication 5 et la revendication 7, **caractérisé en ce que** lesdites informations fournies par la fonction source de démarrage global au logiciel principal comprennent :
- le nombre d'applications clientes de tâche à initialiser ;
- pour chaque application cliente de tâche à initialiser, la fonction source de niveau 1 d'initialisation correspondante.

9. Module de radiocommunication selon l'une quelconque des revendications 5 à 8, **caractérisé en ce que** le jeu de fonctions sources de niveau 1 associé à chaque application cliente de tâche comprend une fonction source de niveau 1 de réception et traitement d'un message provenant du logiciel principal, un paramètre de ladite fonction source de niveau 1 de réception et traitement étant ledit message.

10. Module de radiocommunication selon les revendication 8 et 9, **caractérisé en ce que** lesdites informations fournies par la fonction source de niveau 1 de démarrage global au logiciel principal comprennent en outre :
- pour chaque application cliente de tâche à initialiser, la fonction source de niveau 1 de réception et traitement.

11. Module de radiocommunication selon l'une quelconque des revendications 5 à 10, **caractérisé en ce que** le jeu de fonctions sources de niveau 1 associé à chaque application cliente de tâche comprend une fonction source de niveau 1 d'inscription à un service de boîte aux lettres géré par le logiciel principal, permettant à ladite application cliente de tâche de se voir affecter une boîte aux lettres qui lui est propre et dans laquelle elle souhaite recevoir des informations provenant d'au moins une source prédéterminée.

12. Module de radiocommunication selon la revendication 11, **caractérisé en ce que** chaque source prédéterminée d'informations est une boîte aux lettres affectée à au moins une tâche principale effectuée par le logiciel principal, et contenant des informations que ladite tâche principale souhaite communiquer à une ou plusieurs autres entités.

13. Module de radiocommunication selon l'une quelconque des revendications 1 à 12, **caractérisé en ce que** ledit logiciel client comprend au moins une application cliente de tâche, associée à un jeu de fonctions sources de niveau 1 et réalisant chacune au moins une tâche temps réel distincte,
et **en ce que** le jeu de fonctions sources de niveau 1 associé à chaque application cliente de tâche comprend au moins une fonction appartenant au groupe comprenant :
- une fonction source de niveau 1 d'envoi d'un message (préalablement alloué et rempli) vers une autre application cliente de tâche, via ladite application d'interface et ledit logiciel principal ;
- une fonction source de niveau 1 de déclenchement d'une temporisation dans ledit logiciel principal ;
- une fonction source de niveau 1 d'arrêt d'une temporisation préalablement déclenchée dans ledit logiciel principal ;
- une fonction source de niveau 1 de suivi de la mise au point ;
- une fonction source de niveau 1 d'indication d'une erreur fatale et de redémarrage ;
- une fonction source de niveau 1 d'écriture de données dans une mémoire comprise dans le module de radiocommunication ;
- une fonction source de niveau 1 de lecture de données dans une mémoire comprise dans le module de radiocommunication ;
- une fonction source de niveau 1 de fourniture de la longueur de données stockées dans une mémoire comprise dans le module de radiocommunication ;
- une fonction source de niveau 1 de suppression de données stockées dans une mémoire comprise dans le module de radiocommunication ;
- une fonction source de niveau 1 de fourniture de la quantité de mémoire allouée au sein d'une mémoire comprise dans le module de radiocommunication ;
- une fonction source de niveau 1 de fourniture de la quantité de mémoire libre au sein d'une mémoire comprise dans le module de radiocommunication ;
- une fonction source de niveau 1 de demande d'allocation de mémoire au sein d'une mémoire comprise dans le module de radiocommunication ;
- une fonction source de niveau 1 de demande de libération de mémoire au sein d'une mémoire comprise dans le module de radiocommunication.

14. Module de radiocommunication selon l'une quelconque des revendications 1 à 13, **caractérisé en ce que** le logiciel client embarqué et le logiciel principal utilisent chacun une partie distincte d'une même mémoire vive, une tentative d'accès de l'un des logiciels à une partie de la mémoire vive réservée à l'autre logiciel provoquant un arrêt de fonctionnement.

15. Module de radiocommunication selon l'une quelconque des revendications 1 à 14, **caractérisé en ce que** ledit logiciel client comprend au moins :
- une première application cliente réalisant une première tâche temps réel d'exécution de commandes de pilotage, envoyées à ladite première application par au moins une application cliente de pilotage et appartenant à un jeu de commandes de pilotage prédéterminé, ladite première application cliente étant basée notamment sur un jeu de fonctions d'exécution de niveau 2, spécifiques aux commandes de pilotage et permettant chacune l'exécution d'au moins une desdites commandes de pilotage,
- une seconde application cliente réalisant une seconde tâche temps réel telle que ladite seconde application cliente joue au moins un des deux rôles suivants :
* le rôle d'une application cliente de pilotage, envoyant des commandes de pilotage à la première application cliente, et recevant de la première application cliente des réponses, résultant de l'exécution de certaines des commandes de pilotage ;
* le rôle d'une application cliente de supervision, gérant l'exécution de commandes de pilotage envoyées par une application cliente de pilotage, dite application cliente externe, hébergée et exécutée par un équipement tiers coopérant avec le module de radiocommunication ;
- ladite seconde application cliente étant basée notamment sur un jeu de fonctions sources de niveau 2, spécifiques aux commandes de pilotage et permettant chacune l'envoi ou la réception, vers ou-en-provenance de la première application cliente, de commandes de pilotage ou de réponses à des commandes de pilotage,
- une application d'interface de niveau 2, spécifique aux commandes de pilotage, permettant l'interfaçage desdites fonctions sources et d'exécution de niveau 2, ladite application d'interface de niveau 2 s'appuyant elle-même sur ladite application d'interface de niveau 1.

16. Module de radiocommunication selon la revendication 15, **caractérisé en ce que**, pour permettre à la seconde application cliente de jouer le rôle d'une application cliente de pilotage :
- la seconde application cliente comprend des moyens d'envoi de commandes de pilotage vers les moyens d'exécution compris dans la première application cliente;
- la première application cliente comprend des moyens d'envoi des réponses, résultant de l'exécution de certaines des commandes de pilotage par les moyens d'exécution compris dans la première application cliente, vers la seconde application cliente ;
- la seconde application cliente comprend des moyens de traitement des réponses envoyées vers elle par la première application cliente.

17. Module de radiocommunication selon l'une quelconque des revendications 15 et 16, **caractérisé en ce que**, pour permettre à la seconde application cliente de jouer le rôle d'une application cliente de supervision :
- la première application cliente comprend des moyens d'aiguillage de commandes, en fonction d'une politique d'aiguillage de commandes déterminée, de façon à transmettre les commandes de pilotage provenant de l'application cliente externe vers la seconde application cliente et/ou vers les moyens d'exécution compris dans la première application cliente ;
- la seconde application cliente comprend des moyens de traitement des commandes de pilotage aiguillées vers elle par lesdits moyens d'aiguillage de commandes.

18. Module de radiocommunication selon la revendication 17, **caractérisé en ce que** la seconde application cliente comprend des moyens de sélection de la politique d'aiguillage de commandes appliquée par lesdits moyens d'aiguillage de commandes, parmi un ensemble de politiques d'aiguillage de commandes telles que respectivement :
- les commandes de pilotage provenant de l'application cliente externe sont transmises uniquement aux moyens d'exécution compris dans la première application cliente ;
- les commandes de pilotage provenant de l'application cliente externe sont transmises uniquement à la seconde application cliente ;
- les commandes de pilotage provenant de l'application cliente externe sont transmises aux moyens d'exécution compris dans la première application cliente et la seconde application cliente.

19. Module de radiocommunication selon l'une quelconque des revendications 17 et 18, **caractérisé en ce que** lesdits moyens de traitement des commandes prennent, pour chaque commande, au moins une décision appartenant au groupe comprenant :
- envoi de la commande de pilotage vers les moyens d'exécution compris dans la première application cliente, la seconde application cliente comprenant à cet effet des moyens d'envoi de commandes de pilotage vers les moyens d'exécution;
- fourniture ou non d'une réponse, uniquement en fonction d'au moins une information relative à la commande, sans exécution de la commande, la seconde application cliente comprenant à cet effet des moyens d'envoi de la réponse à l'application cliente externe, via la seconde application cliente.

20. Module de radiocommunication selon l'une quelconque des revendications 15 à 19, **caractérisé en ce que**, pour permettre à la seconde application cliente de jouer le rôle d'une application cliente de supervision :
- la première application cliente comprend des moyens d'aiguillage de réponses, en fonction d'une politique d'aiguillage de réponses déterminée, de façon à transmettre des réponses, résultant de l'exécution de certaines des commandes de pilotage par les moyens d'exécution compris dans la première application cliente, vers la seconde application cliente et/ou vers l'application cliente externe;
- la seconde application cliente comprend des moyens de traitement des réponses aiguillées vers elle par lesdits moyens d'aiguillage de réponses.

21. Module de radiocommunication selon la revendication 20, **caractérisé en ce que** la seconde application cliente comprend des moyens de sélection de la politique d'aiguillage de réponses appliquée par lesdits moyens d'aiguillage de réponses, parmi un ensemble de politiques d'aiguillage de réponses telles que respectivement :
- les réponses provenant des moyens d'exécution sont transmises uniquement à l'application cliente externe ;
- les réponses provenant des moyens d'exécution sont transmises uniquement à la seconde application cliente ;
- les réponses provenant des moyens d'exécution sont transmises à la seconde application cliente et à l'application cliente externe.

22. Module de radiocommunication selon l'une quelconque des revendications 15 à 21, **caractérisé en ce que** ledit jeu de fonctions sources de niveau 2 comprend notamment une fonction de traitement d'un message provenant de la première application, un paramètre de ladite fonction de traitement étant ledit message.

23. Module de radiocommunication selon la revendication 22, **caractérisé en ce que** ledit message formant paramètre de ladite fonction de traitement possède une structure comprenant :
- un premier champ contenant une information relative au type dudit message ;
- un second champ contenant le corps spécifique dudit message.

24. Module de radiocommunication selon la revendication 23, **caractérisé en ce que** le type dudit message appartient au groupe comprenant :
- message contenant une réponse à une commande de pilotage préalablement envoyée à la première application par la seconde application ;
- message contenant une commande de pilotage non sollicitée ;
- message contenant une commande de pilotage envoyée par une application cliente externe, via la première application ;
- message contenant une réponse résultant de l'exécution par la première application d'une commande de pilotage envoyée par l'application cliente externe ;
- message envoyé à l'expiration d'une temporisation.

25. Module de radiocommunication selon l'une quelconque des revendications 22 à 24, **caractérisé en ce que** ledit jeu de fonctions sources de niveau 2 comprend en outre au moins une fonction appartenant au groupe comprenant :
- une fonction source de niveau 2 d'envoi vers la première application d'au moins une commande de pilotage, un premier paramètre de ladite fonction d'envoi étant ladite au moins une commande de pilotage, un second paramètre de ladite fonction d'envoi indiquant le(s) application(s) destinatrice(s), à savoir la seconde application et/ou l'application cliente externe, de la réponse résultant de l'exécution de ladite commande de pilotage ;
- une fonction source de niveau 2 d'inscription auprès de la première application à un service de réception de commandes de pilotage non sollicitées, un paramètre de ladite fonction d'inscription indiquant vers quelle(s) application(s) destinatrice(s), à savoir la seconde application cliente et/ou l'application cliente externe, doit être redirigée chacune des commandes de pilotage non sollicitées ;
- une fonction source de niveau 2 d'inscription auprès de la première application à un service d'aiguillage de commandes de pilotage, un paramètre de ladite fonction d'inscription indiquant vers quelle(s) application(s), à savoir la première application et/ou la seconde application, doit être aiguillée chacune des commandes de pilotage provenant de l'application cliente externe ;
- une fonction source de niveau 2 d'inscription auprès de la première application à un service d'aiguillage de réponses, un paramètre de ladite fonction d'inscription indiquant vers quelle(s) application(s), à savoir l'application cliente externe et/ou la seconde application, doit être aiguillée chacune des réponses résultant de l'exécution par la première application d'une commande de pilotage ;
- une fonction source de niveau 2 d'envoi vers l'application cliente externe, via la première application, d'au moins une réponse, un paramètre de ladite fonction d'envoi étant ladite au moins une réponse.

26. Module de radiocommunication selon l'une quelconque des revendications 15 à 25, **caractérisé en ce que** ledit jeu de commandes de pilotage est un jeu de commandes AT standard.

27. Module de radiocommunication selon la revendication 26, **caractérisé en ce que** ledit jeu-de commandes de pilotage comprend, outre les commandes AT standard, une commande AT supplémentaire (AT+WDWL), dite commande de chargement, permettant à l'application cliente externe de charger une nouvelle seconde application cliente ou la totalité d'un nouveau logiciel client dans le module de radiocommunication.

28. Module de radiocommunication selon l'une quelconque des revendications 26 et 27, **caractérisé en ce que** ledit jeu de commandes de pilotage comprend, outre les commandes AT standard, une commande AT supplémentaire, dite commande de désactivation (AT+WOPEN), permettant à l'application cliente externe de désactiver la seconde application cliente.

29. Module de radiocommunication selon l'une quelconque des revendications 15 à 28, **caractérisé en ce que** ladite seconde application cliente comprend une sous-application cliente principale et au moins une sous-application cliente secondaire, esclave de la sous-application cliente principale, les traitements effectués par ladite seconde application cliente étant répartis entre ladite sous-application cliente principale et ladite au moins une sous-application cliente secondaire.

30. Module de radiocommunication selon la revendication 29 et la revendication 7, **caractérisé en ce que** ladite fonction source de niveau 1 d'initialisation est comprise dans le jeu de fonctions sources de niveau 1 associé à la seconde application cliente de tâche et permet d'initialiser ladite sous-application cliente principale.

31. Module de radiocommunication selon la revendication 30, **caractérisé en ce que** la sous-application cliente principale est associée à un jeu de fonctions sources de niveau 2 comprenant une fonction source de niveau 2 d'abonnement à un service d'envoi de messages provenant de la première application cliente,
et **en ce que** lors de cet abonnement, la sous-application cliente principale communique à la première application cliente l'adresse d'une fonction source de niveau 2 de traitement d'un message, dans laquelle la sous-application cliente principale souhaite recevoir des messages provenant de la première application cliente.

32. Module de radiocommunication selon l'une quelconque des revendications 29 à 31, **caractérisé en ce que** la sous-application cliente secondaire est associée à un jeu de fonctions sources de niveau 2 comprenant une fonction source de niveau 2 d'initialisation de la sous-application cliente secondaire, qui est appelée par la sous-application cliente principale.

33. Module de radiocommunication selon la revendication 32, **caractérisé en ce que** le jeu de fonctions sources de niveau 2 associé à la sous-application cliente secondaire comprend une fonction source de niveau 2 d'abonnement à un service d'envoi de messages provenant de la première application cliente,
et **en ce que** lors de cet abonnement, la sous-application cliente secondaire communique à la première application cliente l'adresse d'une fonction source de niveau 2 de traitement d'un message, dans laquelle la sous-application cliente secondaire souhaite recevoir des messages provenant de la première application cliente.

34. Module de radiocommunication selon l'une quelconque des revendications 32 et 33, **caractérisé en ce que** ladite fonction source de niveau 2 d'initialisation de la sous-application cliente secondaire comprend au moins un paramètre permettant la mise en oeuvre d'un mécanisme de dialogue entre la sous-application cliente principale et la sous-application cliente secondaire.

35. Module de radiocommunication selon l'une quelconque des revendications 32 à 34, **caractérisé en ce que** le jeu de fonctions sources de niveau 2 associé à la sous-application cliente secondaire comprend une fonction source de niveau 2 d'arrêt de la sous-application cliente secondaire, qui est appelée par la sous-application cliente principale.

36. Module de radiocommunication selon l'une quelconque des revendications 32 à 35, **caractérisé en ce que** le jeu de fonctions sources de niveau 2 associé à la sous-application cliente secondaire comprend une fonction source de niveau 2 de désabonnement audit service d'envoi de messages provenant de la première application cliente.

37. Procédé d'ouverture de l'accès à au moins certaines des fonctionnalités d'un logiciel principal d'un module de radiocommunication assurant des fonctions de radiocommunication et destiné à être :
- intégré dans un terminal d'un radiotéléphone, ou
- intégré dans un dispositif nécessitant une fonctionnalité de communication sans fil ou,
- proposé sous forme indépendante, en tant que modem pouvant coopérer avec un équipement tiers, ledit module de radiocommunication étant du type hébergeant et exécutant un logiciel principal comprenant :
- une application de gestion du système d'exploitation (OS),
- une application de gestion des radiocommunications (couche 3 GSM),
- une application de gestion de périphériques pouvant être connectés au module de radiocommunication (HWL),
**caractérisé en ce que** chacune desdites applications comprises dans le logiciel principal est associée à un jeu de fonctions d'exécution de niveau 1,
**en ce que** ledit module de radiocommunication héberge et exécute en outre au moins un logiciel client comprenant au moins une application cliente, associée à un jeu de fonctions sources de niveau 1,
et **en ce que** ledit logiciel principal et/ou ledit logiciel client comprend(nnent) une application d'interface de niveau 1, permettant l'interfaçage des fonctions sources de niveau 1, associées à ladite application cliente, avec les fonctions d'exécution de niveau 1, associées à ladite application de gestion du système d'exploitation et à au moins une desdites applications de gestion des radiocommunications et de gestion de périphériques.

## Patentansprüche

1. Funkkommunikationsmodul, das Funkkommunikationsfunktionen sicherstellt und zu folgenden Zwecken eingesetzt wird:
- in einem Terminal eines Funktelefons integriert zu werden;
- in eine Vorrichtung integriert zu werden, welche eine drahtlose Funkkommunikationsfunktion benötigt oder
- in selbständiger Weise als Modem bereitgestellt zu werden, welches mit einer Fremdvorrichtung zusammenwirken kann,
wobei dieses Funkkommunikationsmodul derart konzipiert ist, dass es ein Hauptsoftwareprogramm aufnimmt und ausführt, welches folgendes umfasst:
- eine Anwendung zum Verwalten des Betriebssystems (OS),
- eine Anwendung zum Verwalten der Funkkommunikationen (Schicht 3 GSM),
- eine Anwendung zum Verwalten von Peripheriegeräten, die mit dem Funkkommunikationsmodul verbunden werden können (HWL),
**dadurch gekennzeichnet, dass** jede dieser im Hauptsoftwareprogramm enthaltenen Anwendungen mit einem Ausführungsfunktionssatz auf der Ebene 1 assoziiert ist,
dadurch, dass das Funkkommunikationsmodul ferner mindestens ein Client-Softwareprogramm umfasst und ausführt, welches mindestens eine Client-Anwendung aufweist, die mit einem Quellenfunktionssatz der Ebene 1 assoziiert ist, und
**dadurch,** dass das erwähnte Hauptsoftwareprogramm und/oder das erwähnte Client-Softwareprogramm eine Schnittstellenanwendung der Ebene 1 umfasst (umfassen), welche die Schnittstellenbildung zwischen den mit der Client-Anwendung assoziierten Quellenfunktionen der Ebene 1 und den Ausführungsfunktionen der Ebene 1 ermöglicht, die mit der Verwaltungsanwendung des Betriebssystems und mit mindestens einer der Verwaltungsanwendungen der Funkkommunikationen und der Verwaltung von Peripheriegeräten assoziiert sind, um der mindestens einen Client-Anwendung den Zugang zu mindestens einigen Funktionen des Hauptsoftwareprogramms zu ermöglichen.

2. Funkkommunikationsmodul nach Anspruch 1, **dadurch gekennzeichnet, dass** die Schnittstellenanwendung in dem erwähnten Client-Softwareprogramm enthalten ist.

3. Funkkommunikationsmodul nach einem der Ansprüche 1 oder 2, **dadurch gekennzeichnet, dass** das Client-Softwareprogramm eine binäre Datei umfasst, die mindestens zwei Client-Anwendungen enthält.

4. Funkkommunikationsmodul nach einem der Ansprüche 1 oder 2, **dadurch gekennzeichnet, dass** das Client-Softwareprogramm mindestens zwei binäre Dateien umfasst, die jeweils mindestens eine Client-Anwendung enthalten.

5. Funkkommunikationsmodul nach einem der Ansprüche 1 bis 4, **dadurch gekennzeichnet, dass** das Client-Softwareprogramm eine Client-Anwendung zum globalen Anlauf und mindestens eine Client-Aufgabenanwendung umfasst, welche mindestens eine Aufgabe in Realzeit durchführt und,
dadurch, dass der mit der Client-Anwendung zum globalen Anlauf assoziierte Quellenfunktionssatz der Ebene 1, deren Rolle es ist, dem Hauptsoftwareprogramm Informationen zu liefern, mit denen es in der Lage ist, jede Client-Aufgabenanwendung zu initialisieren und mit ihr im Dialog zu stehen.

6. Funkkommunikationsmodul nach einem der Ansprüche 1 bis 5, **dadurch gekennzeichnet, dass** das Client-Softwareprogramm mindestens zwei Client-Aufgabenanwendungen umfasst, die jeweils mit einem Quellenfunktionssatz der Ebene 1 assoziiert sind und jeweils mindestens eine verschiedene Aufgabe in Realzeit ausführen und,
dadurch, dass das erwähnte Hauptsoftwareprogramm und/oder das erwähnte Client-Softwareprogramm Mittel zum Teilen der Rechenressourcen zwischen den erwähnten Client-Aufgabenanwendungen umfasst (umfassen), um einen Mehrfachaufgabenbetrieb in Realzeit zu ermöglichen.

7. Funkkommunikationsmodul nach einem der Ansprüche 5 oder 6, **dadurch gekennzeichnet, dass** der mit jeder Client-Aufgabenanwendung assoziierte Satz von Quellenfunktionen der Ebene 1 eine Quellenfunktion zum Initialisieren der Ebene 1 umfasst, die das Initialisieren der Client-Aufgabenanwendung ermöglicht.

8. Funkkommunikationsmodul nach Anspruch 5 und nach Anspruch 7, **dadurch gekennzeichnet, dass** die von der Quellenfunktion zum globalen Anlauf an das Hauptsoftwareprogramm gelieferten Informationen folgendes umfassen:
- die Zahl der zu initialisierenden Client-Aufgabenanwendungen;
- für jede zu initialisierende Client-Aufgabenanwendung, die entsprechende Quellenfunktion zum Initialisieren der Ebene 1.

9. Funkkommunikationsmodul nach einem der Ansprüche 5 bis 8, **dadurch gekennzeichnet, dass** der Satz der mit jeder Client-Aufgabenanwendung assoziierten Quellenfunktionen der Ebene 1 eine Quellenfunktion der Ebene 1 umfasst, die den Empfang und das Verarbeiten einer vom Hauptsoftwareprogramm kommenden Meldung ermöglicht, wobei ein Parameter dieser Quellenfunktion der Ebene 1 zum Empfang und Verarbeitung die besagte Meldung bildet.

10. Funkkommunikationsmodul nach den Ansprüchen 8 und 9, **dadurch gekennzeichnet, dass** die von der Quellenfunktion der Ebene 1 zum globalen Anlauf an das Hauptsoftwareprogramm gelieferten Informationen ferner folgendes umfassen:
- für jede zu initialisierende Client-Aufgabenanwendung, die Quellenfunktion der Ebene 1 zum Empfang und zur Verarbeitung.

11. Funkkommunikationsmodul nach einem der Ansprüche 5 bis 10, **dadurch gekennzeichnet, dass** der Satz von mit jeder Client-Aufgabenanwendung assoziierten Quellenfunktionen der Ebene 1 eine Quellenfunktion der Ebene 1 zum Eintragen in einer vom Hauptsoftwareprogramm verwalteten Briefkastendienstleistung umfasst, die es ermöglicht, der besagten Client-Aufgabenanwendung einen eigenen Briefkasten zuzuordnen, in dem sie die aus mindestens einer vorbestimmten Quelle kommenden Informationen empfangen möchte.

12. Funkkommunikationsmodul nach Anspruch 11, **dadurch gekennzeichnet, dass** jede vorbestimmte Informationsquelle ein Briefkasten ist, der mindestens einer vom Hauptsoftwareprogramm ausgeführten Hauptaufgabe zugeordnet ist und Informationen enthält, welche die besagte Hauptaufgabe einer anderen Instanz oder mehreren anderen Instanzen mitteilen möchte.

13. Funkkommunikationsmodul nach einem der Ansprüche 1 bis 12, **dadurch gekennzeichnet, dass** das Client-Softwareprogramm mindestens eine Client-Aufgabenanwendung umfasst, die mit einem Satz von Quellenfunktionen der Ebene 1 assoziiert ist, welche jeweils mindestens eine verschiedene Realzeitaufgabe durchführen und,
dass der Satz von mit jeder Client-Aufgabenanwendung assoziierten Quellenfunktionen der Ebene 1 mindestens eine Funktion aus der folgendes umfassenden Gruppe enthält:
- eine Quellenfunktion der Ebene 1 zum Senden einer (vorher zugeordneten und erfüllten) Meldung zu einer anderen Client-Aufgabenanwendung, über die erwähnte Schnittstellenanwendung und dem Hauptsoftwareprogramm;
- eine Quellenfunktion der Ebene 1, zum Auslösen einer Verzögerung im Hauptsoftwareprogramm;
- eine Quellenfunktion der Ebene 1 zum Anhalten einer vorher im Hauptsoftwareprogramm ausgelösten Verzögerung;
- eine Quellenfunktion der Ebene 1 zum Verfolgen der Abstimmung;
- eine Quellenfunktion der Ebene 1 zum Angeben eines schweren Fehlers und zum erneuten Anlauf;
- eine Quellenfunktion der Ebene 1 zum Schreiben von Daten in einen im Funkkommunikationsmodul befindlichen Speicher;
- eine Quellenfunktion der Ebene 1 zum Lesen von Daten aus einem im Funkkommunikationsmodul befindlichen Speicher;
- eine Quellenfunktion der Ebene 1 zum Angeben der Länge der in einem im Funkkommunikationsmodul befindlichen Speicher enthaltenen Daten;
- eine Quellenfunktion der Ebene 1 zum Löschen von in einem im Funkkommunikationsmodul befindlichen Speicher enthaltenen Daten;
- eine Quellenfunktion der Ebene 1 zum Bereitstellen der in einem im Funkkommunikationsmodul befindlichen Speicher zugeordneten Speicherkapazität;
- eine Quellenfunktion der Ebene 1 zum Bereitstellen der in einem im Funkkommunikationsmodul befindlichen Speicher freien Speicherkapazität;
- eine Quellenfunktion der Ebene 1 zum Beantragen der Zuordnung von in einem im Funkkommunikationsmodul befindlichen Speicher vorhandenen Speicherkapazität;
- eine Quellenfunktion der Ebene 1 zum Beantragen der Freigabe von in einem im Funkkommunikationsmodul befindlichen Speicher vorhandenen Speicherkapazität.

14. Funkkommunikationsmodul nach einem der Ansprüche 1 bis 13, **dadurch gekennzeichnet, dass** das mitgeführte Client-Softwareprogramm und das Hauptsoftwareprogramm jeweils einen anderen Teil eines selben RAM-Speichers nutzen, wobei ein Zugriffsversuch eines der Softwareprogramme auf einem dem anderen Softwareprogramm vorbehaltenen Teil des RAM-Speichers einen Betriebsstillstand verursacht.

15. Funkkommunikationsmodul nach einem der Ansprüche 1 bis 14, **dadurch gekennzeichnet, dass** das Client-Softwareprogramm mindestens folgendes umfasst:
- eine erste Client-Anwendung, die eine erste Realzeitaufgabe zum Ausführen von Steuerbefehlen durchführt, welche der erwähnten ersten Anwendung durch mindestens eine Client-Steuerungsanwendung gesendet werden und einem vorbestimmten Satz von Steuerbefehlen angehören, wobei die erste Client-Anwendung insbesondere auf einem Satz von Ausführungsfunktionen der Ebene 2 beruht, welche für die Steuerbefehle spezifisch sind und jeweils das Ausführen von mindestens einem dieser Steuerbefehle ermöglichen,
- eine zweite Clientanwendung, die eine zweite Realzeitaufgabe ausführt, so dass die erwähnte zweite Client-Anwendung mindestens eine der zwei folgenden Rollen spielt:
* die Rolle einer Client-Steueranwendung, die Steuerbefehle an die erste Client-Anwendung sendet und von dieser ersten Client-Anwendung Antworten erhält, die das Ergebnis der Ausführung einiger dieser Steuerbefehle sind;
* die Rolle einer Überwachungs-Client-Anwendung, welche die Durchführung der Steuerbefehle verwaltet, die von einer externe Client-Anwendung genannten Client-Steueranwendung gesendet werden, welche durch eine fremde Anlage beherbergt und ausgeführt wird, die mit dem Funkkommunikationsmodul zusammenarbeitet;
wobei die zweite Client-Anwendung insbesondere auf einem Satz von Quellenfunktionen der Ebene 2 aufbaut, die den Steuerbefehlen spezifisch sind und jeweils das Senden oder Empfangen von Steuerbefehlen oder von Antworten auf Steuerbefehle, zur ersten Client-Anwendung oder von dieser kommend, ermöglichen,
- eine Schnittstellenanwendung der Ebene 2, die den Steuerbefehlen spezifisch ist und die Verflechtung der Quell- und Ausführungsfunktionen der Ebene 2 ermöglichen, wobei sich die Schnittstellenanwendung der Ebene 2 selbst auf die Schnittstellenanwendung der Ebene 1 stützt.

16. Funkkommunikationsmodul nach Anspruch 15, **dadurch gekennzeichnet, dass**, um es der zweiten Client-Anwendung zu ermöglichen, die Rolle einer Client-Steuerungsanwendung zu spielen:
- die zweite Client-Anwendung über Mittel zum Senden von Steuerbefehlen zu den in der ersten Client-Anwendung enthaltenen Ausführungsmitteln verfügt;
- die erste Client-Anwendung über Mittel zum Senden der Antworten, die sich aus der Ausführung einiger Steuerbefehle durch die in der ersten Client-Anwendung enthaltenen Ausführungsmittel ergeben, zu der zweiten Client-Anwendung verfügt;
- die zweite Client-Anwendung über Mittel zum Verarbeiten der ihr von der ersten Client-Anwendung zugesandten Antworten verfügt.

17. Funkkommunikationsmodul nach einem der Ansprüche 15 oder 16, **dadurch gekennzeichnet, dass**, um es der zweiten Client-Anwendung zu ermöglichen, die Rolle einer Überwachungs-Client-Anwendung zu spielen:
- die erste Client-Anwendung über Mittel zum Lenken von Befehlen als Funktion einer gegebenen Verfahrensweise zum Lenken von Befehlen verfügt, so dass die von der externen Client-Anwendung kommenden Steuerbefehle zu der zweiten Client-Anwendung und/oder zu den in der ersten Client-Anwendung enthaltenen Ausführungsmitteln gesendet werden;
- die zweite Client-Anwendung über Mittel zum Verarbeiten der Steuerbefehle verfügt, die ihr von den zweiten Mitteln zum Lenken von Befehlen zugeführt wurden.

18. Funkkommunikationsmodul nach Anspruch 17, **dadurch gekennzeichnet, dass** die zweite Client-Anwendung über Mittel zum Wählen der von den Mitteln zum Lenken von Befehlen angewandten Verfahrensweise zum Lenken von Befehlen verfügt, unter einer Menge von Verfahrensweisen zum Lenken von Befehlen, die derart sind, dass:
- die von der externen Client-Anwendung kommenden Steuerbefehle nur an die in der ersten Client-Anwendung enthaltenen Ausführungsmittel gesendet werden;
- die von der externen Client-Anwendung kommenden Steuerbefehle nur an die zweite Client-Anwendung gesendet werden;
- die von der externen Client-Anwendung kommenden Steuerbefehle an die in der ersten und der zweiten Client-Anwendung enthaltenen Ausführungsmittel gesendet werden.

19. Funkkommunikationsmodul nach einem der Ansprüche 17 oder 18, **dadurch gekennzeichnet, dass** die erwähnten Mittel zur Befehlsverarbeitung für jeden Befehl mindestens eine Entscheidung aus der Gruppe treffen, die folgendes umfasst:
- Senden des Steuerbefehls zu den in der ersten Client-Anwendung enthaltenen Ausführungsmitteln, wobei die zweite Client-Anwendung zu diesem Zweck über Mittel zum Senden von Steuerbefehlen zu den Ausführungsmitteln verfügt;
- Liefern oder nicht Liefern einer Antwort nur als Funktion von mindestens einer den Befehl betreffenden Information, ohne Ausführung dieses Befehls, wobei die zweite Client-Anwendung zu diesem Zweck Mittel zum Senden der Antwort an die externe Client-Anwendung über den Weg der zweiten Client-Anwendung verfügt.

20. Funkkommunikationsmodul nach einem der Ansprüche 15 bis 19, **dadurch gekennzeichnet, dass**, um der zweiten Client-Anwendung das Spielen der Rolle einer Überwachungs-Client-Anwendung zu ermöglichen:
- die erste Client-Anwendung über Mittel zum Lenken der Antworten verfügt, als Funktion einer bestimmten Verfahrensweise zum Lenken von Antworten, um Antworten, die sich aus der Ausführung einiger der Steuerbefehle durch die in der ersten Client-Anwendung enthaltenen Ausführungsmittel, zu der zweiten Client-Anwendung und/oder zur externen Client-Anwendung zu senden;
- die zweite Client-Anwendung über Mittel zum Verarbeiten der Antworten verfügt, die ihr von den erwähnten Mitteln zum Lenken von Antworten zugeführt wurden.

21. Funkkommunikationsmodul nach Anspruch 20, **dadurch gekennzeichnet, dass** die zweite Client-Anwendung über Mittel zur Auswahl der von den erwähnten Mitteln zum Lenken von Antworten angewandten Verfahrensweise zum Lenken der Antworten unter einer Menge von Verfahrensweise zum Lenken von Antworten verfügt, welche derart sind, dass jeweils:
- die von den Ausführungsmitteln kommenden Antworten nur an die externe Client-Anwendung gesendet werden;
- die von den Ausführungsmitteln kommenden Antworten nur an die zweite Client-Anwendung gesendet werden;
- die von den Ausführungsmitteln kommenden Antworten an die zweite Client-Anwendung sowie an die externe Client-Anwendung gesendet werden.

22. Funkkommunikationsmodul nach einem der Ansprüche 15 bis 21, **dadurch gekennzeichnet, dass** der Satz von Quellenfunktionen der Ebene 2 insbesondere eine Funktion zum Verarbeiten einer von der ersten Anwendung kommenden Meldung umfasst, wobei ein Parameter dieser Funktion die besagte Meldung ist.

23. Funkkommunikationsmodul nach Anspruch 22, **dadurch gekennzeichnet, dass** die einen Parameter der Verarbeitungsfunktion bildende Meldung eine Struktur aufweist, die folgendes umfasst:
- ein erstes Feld, welches eine Information bezüglich der Art der Meldung enthält;
- ein zweites Feld, welches den spezifischen Körper der Meldung enthält.

24. Funkkommunikationsmodul nach Anspruch 23, **dadurch gekennzeichnet, dass** die Art der besagten Meldung der folgendes umfassenden Gruppe gehört:
- Meldung, die eine Antwort auf einen vorher an die erste Anwendung von der zweiten Anwendung gesendeten Steuerbefehl enthält;
- Meldung, die einen nicht angeforderten Steuerbefehl enthält;
- Meldung, die einen von einer externen Client-Anwendung über den Weg der ersten Anwendung gesendeten Steuerbefehl enthält;
- Meldung, die eine sich aus der Ausführung der ersten Anwendung eines von der externen Client-Anwendung gesendeten Steuerbefehls ergebenden Antwort enthält;
- beim Ablauf einer Verzögerung gesendete Meldung.

25. Funkkommunikationsmodul nach einem der Ansprüche 22 bis 24, **dadurch gekennzeichnet, dass** der erwähnte Satz von Quellenfunktionen der Ebene 2 ferner mindestens eine Funktion aus der folgendes umfassenden Gruppe enthält:
- eine Quellenfunktion der Ebene 2 zum Senden von mindestens einem Steuerbefehl an die erste Anwendung, wobei ein erster Parameter der besagten Sendefunktion dieser mindestens eine Steuerbefehl ist und,
wobei ein zweiter Parameter dieser Sendefunktion die Empfängeranwendung(en), nämlich die zweite Anwendung und/oder die externe Client-Anwendung, der Antwort angibt, die sich aus der Ausführung des ersten Steuerbefehls ergibt;
- eine Quellenfunktion der Ebene 2 zur Eintragung bei der ersten Anwendung in eine Dienstleistung zum Empfang von nicht angeforderten Steuerbefehlen, wobei ein Parameter dieser Eintragungsfunktion angibt, zu welcher (welchen) Empfängeranwendung(en), nämlich die zweite Client-Anwendung und/oder die externe Client-Anwendung, jeder der nicht angeforderten Steuerbefehle weitergeleitet werden soll;
- eine Quellenfunktion der Ebene 2 zur Eintragung bei der ersten Anwendung in eine Dienstleistung zum Lenken von Steuerbefehlen, wobei ein Parameter dieser Eintragungsfunktion angibt, zu welcher (welchen) Anwendung(en), nämlich die erste Anwendung und/oder die zweite Anwendung, jeder der von der externen Client-Anwendung kommenden Steuerbefehle gelenkt werden soll;
- eine Quellenfunktion der Ebene 2 zur Eintragung bei der ersten Anwendung in eine Dienstleistung zum Lenken von Antworten, wobei ein Parameter dieser Eintragungsfunktion angibt, zu welcher (welchen) Anwendung(en), nämlich die externe Client-Anwendung und/oder die zweite Anwendung, jeder der sich aus der Ausführung der ersten Anwendung eines Steuerbefehls ergebenden Antwort gelenkt werden soll;
- eine Quellenfunktion der Ebene 2 zum Senden von mindestens einer Antwort an die externe Client-Anwendung über den Weg der ersten Anwendung, wobei ein Parameter dieser Sendefunktion diese mindestens eine Antwort ist.

26. Funkkommunikationsmodul nach einem der Ansprüche 15 bis 25, **dadurch gekennzeichnet, dass** es sich beim erwähnte Satz von Steuerbefehlen um einen Satz von AT-Standard-Befehlen handelt.

27. Funkkommunikationsmodul nach Anspruch 26, **dadurch gekennzeichnet, dass** der Satz von Steuerbefehlen neben den AT-Standard-Befehlen einen Ladebefehl genannten zusätzlichen AT-Befehl (AT + WDWL) umfasst, der es der externen Client-Anwendung ermöglicht, eine neue zweite Client-Anwendung oder die Gesamtheit eines neuen Client-Softwareprogramms in das Funkkommunikationsmodul zu laden.

28. Funkkommunikationsmodul nach einem der Ansprüche 26 oder 27, **dadurch gekennzeichnet, dass** der Satz von Steuerbefehlen neben den AT-Standard-Befehlen einen Deaktivierungsbefehl genannten zusätzlichen AT-Befehl (AT + WOPEN) umfasst, der es der externen Client-Anwendung ermöglicht, die zweite Client-Anwendung zu deaktivieren.

29. Funkkommunikationsmodul nach einem der Ansprüche 15 bis 28, **dadurch gekennzeichnet, dass** die zweite Client-Anwendung eine Haupt-Client-Unteranwendung sowie mindestens eine sekundäre Client-Unteranwendung umfasst, die der Haupt-Client-Unteranwendung untergeordnet ist, wobei die von der zweiten Client-Anwendung durchgeführten Verarbeitungsschritte unter der Haupt-Client-Unteranwendung und der mindestens einen sekundären Client-Unteranwendung verteilt sind.

30. Funkkommunikationsmodul nach Anspruch 29 und nach Anspruch 7, **dadurch gekennzeichnet, dass** die Quellenfunktion der Ebene 1 zum Initialisieren dem mit der ersten Aufgaben-Client-Anwendung assoziierten Satz von Quellenfunktionen der Ebene 1 gehört, wobei sie das Initialisieren der zweiten Haupt-Client-Unteranwendung ermöglicht.

31. Funkkommunikationsmodul nach Anspruch 30, **dadurch gekennzeichnet, dass** die Haupt-Client-Unteranwendung mit einem Satz von Quellenfunktionen der Ebene 2 assoziiert ist, welche eine Quellenfunktion der Ebene 2 zum Abonnieren einer Dienstleistung zum Senden von Meldungen, die von der ersten Client-Anwendung kommen, umfasst und,
dass bei diesem Abonnieren, die Haupt-Client-Unteranwendung der ersten Client-Anwendung die Adresse einer Quellenfunktion der Ebene 2 zum Verarbeiten einer Meldung mitteilt, in welcher es die Haupt-Client-Unteranwendung wünscht, von der ersten Client-Anwendung kommende Meldungen zu empfangen.

32. Funkkommunikationsmodul nach einem der Ansprüche 29 bis 31, **dadurch gekennzeichnet, dass** die sekundäre Client-Unteranwendung mit einem Satz von Quellenfunktionen der Ebene 2 assoziiert ist, unter denen sich eine Quellenfunktion der Ebene 2 zum Initialisieren der von der Haupt-Client-Unteranwendung aufgerufenen sekundären Client-Unteranwendung befindet.

33. Funkkommunikationsmodul nach Anspruch 32, **dadurch gekennzeichnet, dass** der mit der sekundären Client-Unteranwendung assoziierte Satz von Quellenfunktionen der Ebene 2 eine Quellenfunktion der Ebene 2 zum Abonnieren einer Dienstleistung zum Senden von Meldungen umfasst, die von der ersten Client-Anwendung kommen und,
dass bei diesem Abonnieren, die sekundäre Client-Unteranwendung der ersten Client-Anwendung die Adresse einer Quellenfunktion der Ebene 2 zum Verarbeiten einer Meldung mitteilt, in welcher es die sekundäre Client-Unteranwendung wünscht, von der ersten Client-Anwendung kommende Meldungen zu empfangen.

34. Funkkommunikationsmodul nach einem der Ansprüche 32 oder 33, **dadurch gekennzeichnet, dass** die Quellenfunktion der Ebene 2 zum Initialisieren der sekundären Client-Unterfunktion mindestens einen Parameter umfasst, der die Errichtung eines Dialogmechanismus zwischen der Haupt-Client-Unteranwendung und der sekundären Client-Unteranwendung ermöglicht.

35. Funkkommunikationsmodul nach einem der Ansprüche 32 bis 34, **dadurch gekennzeichnet, dass** der mit der sekundären Client-Unteranwendung assoziierte Satz von Quellenfunktionen der Ebene 2 eine von der Haupt-Client-Unterfunktion aufgerufene Quellenfunktion der Ebene 2 zum Anhalten der sekundären Client-Unterfunktion umfasst.

36. Funkkommunikationsmodul nach einem der Ansprüche 32 bis 35, **dadurch gekennzeichnet, dass** der mit der sekundären Client-Unteranwendung assoziierte Satz von Quellenfunktionen der Ebene 2 eine Quellenfunktion der Ebene 2 zum Kündigen des Abonnements an der Dienstleistung zum Senden von Meldungen umfasst, die von der ersten Client-Anwendung kommen.

37. Verfahren zum Ermöglichen des Zugangs zu mindestens einigen Funktionen eines Haupt-Softwareprogramms eines Funkkommunikationsmoduls, das Funkkommunikationsaufgaben ausführt und die folgenden Zwecke erfüllen soll:
- in einem Terminal eines Funktelefons integriert zu werden;
- in eine Vorrichtung integriert zu werden, welche eine drahtlose Funkkommunikationsfunktion benötigt oder
- in selbständiger Weise als Modem bereitgestellt zu werden, welches mit einer Fremdvorrichtung zusammenwirken kann,
wobei dieses Funkkommunikationsmodul derart konzipiert ist, dass es ein Haupt-Softwareprogramm enthält und ausführt, welches folgendes umfasst:
- eine Anwendung zum Verwalten des Betriebssystems (OS),
- eine Anwendung zum Verwalten der Funkkommunikationen (Schicht 3 GSM),
- eine Anwendung zum Verwalten von Peripheriegeräten, die mit dem Funkkommunikationsmodul verbunden werden können (HWL),
**dadurch gekennzeichnet, dass** jede dieser im Hauptsoftwareprogramm enthaltenen Anwendungen mit einem Ausführungsfunktionssatz der Ebene 1 assoziiert ist,
dadurch, dass das Funkkommunikationsmodul ferner mindestens ein Client-Softwareprogramm umfasst und ausführt, welches mindestens eine Client-Anwendung aufweist, die mit einem Quellenfunktionssatz der Ebene 1 assoziiert ist, und
dadurch, dass das erwähnte Hauptsoftwareprogramm und/oder das erwähnte Client-Softwareprogramm eine Schnittstellenanwendung der Ebene 1 umfasst (umfassen), welche die Schnittstellenbildung zwischen den mit der Client-Anwendung assoziierten Quellenfunktionen der Ebene 1 und den Ausführungsfunktionen der Ebene 1 ermöglicht, die mit der Verwaltungsanwendung des Betriebssystems und mit mindestens einer der Verwaltungsanwendungen der Funkkommunikationen und der Verwaltung von Peripheriegeräten assoziiert sind.

## Claims

1. Radiocommunication module providing radiocommunication functions and intended to be :
- integrated in a radiotelephone terminal, or
- integrated in a device requiring a wireless communication functionnality or,
- proposed in an independent form, as a modem, which can cooperate with a third party equipment,
said radiocommunication module being of the type that hosts and runs a main software program including:
- an operating system management application (OS),
- a radio communication management application (layer 3 GSM),
- an application for managing peripheral devices that can be connected to the radio communication module (HWL),
**characterised in that** each of said applications included in the main software program is associated with a set of level I executive functions,
**in that** said radio communication module additionally hosts and runs at least one customer software program including at least one customer application, associated with a set of level 1 source functions,
and **in that** said main software program and/or said customer software program include(s) a level 1 interface application, allowing level 1 source functions, associated with said customer application, to interface with level 1 executive functions, associated with said operating system management application and with at least one of said radio communication management and peripheral device management applications, so as to open up, to at least one customer application, access to at least some of the functionalities of the main software program.

2. Radiocommunication module according to claim 1, **characterised in that** said interface application is included in said customer software program.

3. Radiocommunication module according to any one of claims 1 and 2, **characterised in that** said customer software program includes a binary file containing at least two customer applications.

4. Radiocommunication module according to any one of claims I and 2, **characterised in that** said customer software program includes at least two binary files, each containing at least one customer application.

5. Radiocommunication module according to any one of claims 1 to 4, **characterised in that** said customer software program includes a global initialisation customer application, and at least one customer task application carrying out at least one real-time task,
and **in that** the set of level 1 source functions associated with the global initialisation customer application includes a level 1 global initialisation source function, the role of which is to provide the main software program with information allowing it to initialise and to interact with each customer task application.

6. Radiocommunication module according to any one of claims 1 to 5,
**characterised in that** said customer software program includes at least two customer task applications, each associated with a set of level 1 source functions and each carrying out at least one distinct real-time task,
and **in that** said main software program and/or said customer software program include(s) means of sharing out calculation resources between said customer task applications, so as to allow a real-time multi-task operation.

7. Radiocommunication module according to any one of claims 5 and 6, **characterised in that** the set of level 1 source functions associated with each customer task application includes a level 1 initialisation source function, allowing said customer task application to be initialised.

8. Radiocommunication module according to claim 5 and claim 7, **characterised in that** said information provided by the global initialisation source function to the main software program includes:
- the number of customer task applications to be initialised;
- for each customer task application to be initialised, the corresponding level 1 initialisation source function.

9. Radiocommunication module according to any one of claims 5 to 8, **characterised in that** the set of level 1 source functions associated with each customer task application includes a level 1 source function of receiving and processing a message from the main software program, one parameter of said level 1 receive and process source function being said message.

10. Radiocommunication module according to claims 8 and 9, **characterised in that** said information provided by the level I global initialisation source function to the main software program includes additionally:
- for each customer task application to be initialised, the level 1 receive and process source function.

11. Radiocommunication module according to any one of claims 5 to 10, **characterised in that** the set of level 1 source functions associated with each customer task application includes a level 1 source function of subscribing to a mailbox service managed by the main software program, allowing said customer task application to get itself allocated a mailbox which is specific to it and in which it wishes to receive information coming from least one predetermined source.

12. Radio communication module according to claim 11, **characterised in that** each predetermined information source is a mailbox allocated to at least one main task carried out by the main software program, and containing information which said main task wishes to communicate to one or more other entities.

13. Radio communication module according to any one of claims 1 to 12, **characterised in that** said customer software program includes at least one customer task application, associated with a set of level 1 source functions and each carrying out at least one distinct real-time task,
and **in that** the set of level 1 source functions associated with each customer task application includes at least one function belonging to the group including:
- a level 1 source function of sending a message (previously allocated and completed) to another customer task application, via said interface application and said main software program;
- a level 1 source function of triggering a time delay in said main software program;
- a level 1 source function of stopping a time delay previously triggered in said main software program;
- a level 1 source function of tracing the debugging;
- a level 1 source function of showing a fatal error and rebooting;
- a level 1 source function of writing data into a memory included in the radiocommunication module;
- a level 1 source function of reading data in a memory included in the radiocommunication module;
- a level 1 source function of providing the length of data stored in a memory included in the radiocommunication module;
- a level I source function of deleting data stored in a memory included in the radiocommunication module;
- a level 1 source function of providing the quantity of memory allocated within a memory included the radiocommunication module;
- a level 1 source function of providing the quantity of free memory within a memory included the radiocommunication module;
- a level 1 source function of requesting memory allocation within a memory included the radiocommunication module;
- a level 1 memory of requesting the release of memory within a memory included in the radiocommunication module.

14. Radiocommunication module according to any one of claims 1 to 13, **characterised in that** the embedded customer software program and the main software program each use a different part of the same random access memory, an attempt by one of the software programs to access a part of the random access memory reserved for the other software program causing a stop in operation.

15. Radiocommunication module according to any one of claims 1 to 14, **characterised in that** said customer software program includes at least:
- a first customer application carrying out a first real-time task of executing control commands, sent to said first application by at least one customer control application and belonging to a predetermined set of control commands, said first customer application being based particularly on a set of level 2 executive functions, specific to the control commands and each allowing at least one of said control commands to be executed,
- a second customer application carrying out a second real-time task such that said second customer application plays at least one of the following roles:
* the role of a customer control application, sending control commands to the first customer application, and receiving from the first customer application responses arising from the execution of some of the control commands;
* the role of a customer supervision application, managing the execution of control commands sent by a customer control application, called external customer application , hosted and run by third party equipment engaging with the radiocommunication module;
said second customer application being based particularly on a set of level 2 source functions, specific to the control commands and each allowing control commands or responses to control commands to be sent or received, to or from the first customer application,
- a level 2 interface application, specific to the control commands, allowing said level 2 source and executive functions to interface, said level 2 interface application itself being based on said level 1 interface application.

16. Radiocommunication module according to claim 15, **characterised in that**, to allow the second customer application to play the role of a customer control application:
- the second customer application includes means of sending control commands to the executive means included in the first customer application;
- the first customer application includes means of sending responses, arising from the execution of some of the control commands by the executive means included in the first customer application, to the second customer application;
- the second customer application includes means of processing the responses sent to it by the first customer application.

17. Radiocommunication module according to any one of claims 15 and 16, **characterised in that**, to allow the second customer application to play the role of a customer supervision application:
- the first customer application includes command switching means, as a function of a pre-set command switching policy, so as to transmit the control commands coming from the external customer application to the second customer application and/or to the executive means included in the first customer application;
- the second customer application includes means of processing the control commands switched to it by said command switching means.

18. Radiocommunication module according to claim 17, **characterised in that** the second customer application includes means of selecting the command switching policy applied by said command switching means, among a set of command switching policies such that respectively:
- the control commands from the external customer application are transmitted only to the executive means included in the first customer application;
- the control commands from the external customer application are transmitted only to the second customer application;
- the control commands from the external customer application are transmitted to the executive means included in the first customer application and the second customer application.

19. Radiocommunication module according to any one of claims 17 and 18, **characterised in that** said command processing means take, for each command, at least one decision belonging to the group that includes:
- sending the control command to the executive means included in the first customer application, the second customer application including to this end means of sending control commands to the executive means;
- providing or not providing a response, solely as a function of at least one piece of information relating to the command, without executing the command, the second customer application including to this end means of sending the response to the external customer application, via the second customer application.

20. Radiocommunication module according to any one of claims 15 to 19, **characterised in that**, to allow the second customer application to play the role of a customer supervision application:
- the first customer application includes response switching means, as a function of a pre-set response switching policy, so as to transmit responses, arising from the execution of some of the control commands by the executive means included in the first customer application, to the second customer application and/or to the external customer application;
- the second customer application includes means of processing responses switched to it by said response switching means.

21. Radiocommunication module according to claim 20, **characterised in that** the second customer application includes means of selecting the response switching policy applied by said response switching means, among a set of response switching policies such that respectively:
- the responses from the executive means are transmitted solely to the external customer application;
- the responses from the executive means are transmitted solely to the second customer application;
- the responses from the executive means are transmitted to the second customer application and to the external customer application.

22. Radiocommunication module according to any one of claims 15 to 21, **characterised in that** said set of level 2 source functions includes particularly a function of processing a message from the first application, one parameter of said processing function being said message.

23. Radiocommunication module according to claim 22, **characterised in that** said message forming a parameter of said processing function has a structure including:
- a first field containing a piece of information relating to the type of said message;
- a second field containing the specific body of said message.

24. Radiocommunication module according to claim 23, **characterised in that** the type of said message belongs to the group including:
- a message containing a response to a control command previously sent to the first application by the second application;
- a message containing an unsolicited control command;
- a message containing a control command sent by an external customer application, via the first application;
- a message containing a response arising from the execution by the first application of a control command sent by the external customer application;
- a message sent on expiry of a time delay.

25. Radiocommunication module according to any one of claims 22 to 24, **characterised in that** said set of level 2 source functions additionally includes at least one function belonging to the group including:
- a level 2 source function of sending to the first application at least one control command, a first parameter of said send function being said at least one control command, a second parameter of said send function indicating the application(s), namely the second application and/or the external customer application, to which the response arising from the execution of said control command is to be addressed;
- a level 2 source function of subscribing with the first application to a service of receiving unsolicited control commands, one parameter of said subscription function indicating to which addressee application(s), namely the second customer application and/or the external customer application, each of the unsolicited control commands is to be redirected;
- a level 2 source function of subscribing with the first application to a control command switching service, one parameter of said subscription function indicating to which application(s), namely the first application and/or the second application, each of the control commands from the external customer application is to be switched;
- a level 2 source function of subscribing with the first application to the response switching service, one parameter of said subscription function indicating to which application(s), namely the external customer application and/or the second application, each of the responses arising from the execution by the first application of a control command is to be switched;
- a level 2 source function of sending to the external customer application, via the first application, at least one response, one parameter of said send function being said at least one response.

26. Radiocommunication module according to any one of claims 15 to 25, **characterised in that** said set of control commands is a standard set of AT commands.

27. Radiocommunication module according to claim 26, **characterised in that** said set of control commands includes, apart from the standard AT commands, an additional AT command (AT+WDWL), known as a load command, allowing the external customer application to load a new second customer application or the totality of a new customer software program in the radiocommunication module.

28. Radiocommunication module according to any one of claims 26 and 27, **characterised in that** said set of control commands includes, apart from the standard AT commands, an additional AT command, known as the disabling command (AT+WOPEN), allowing the external customer application to disable the second customer application.

29. Radiocommunication module according to any one of claims 15 to 28, **characterised in that** said second customer application includes a main customer sub-application and at least one secondary customer sub-application, slave of the main customer sub-application, the processing operations carried out by said second customer application being shared out between said main customer sub-application and said at least one secondary customer sub-application.

30. Radiocommunication module according to claim 29 and claim 7, **characterised in that** said level 1 initialisation source function is included in the set of level 1 source functions associated with the second customer task application and allows said main customer sub-application to be initialised.

31. Radiocommunication module according to claim 30, **characterised in that** the main customer sub-application is associated with a set of level 2 source functions including a level 2 source function of subscribing to a service of sending messages from the first customer application,
and **in that** at this subscription, the main customer sub-application sends the first customer application the address of a level 2 message processing source function, in which the main customer sub-application wishes to receive messages from the first customer application.

32. Radiocommunication module according to any one of claims 29 to 31, **characterised in that** the secondary customer sub-application is associated with a set of level 2 source functions including a level 2 source function of initialising the secondary customer sub-application, which is called upon by the main customer sub-application.

33. Radiocommunication module according to claim 32, **characterised in that** the set of level 2 source functions associated with the secondary customer sub-application includes a level 2 source function of subscribing to a service of sending messages from the first customer application,
and **in that** at this subscription, the secondary customer sub-application sends the first customer application the address of a level 2 message processing source function, in which the secondary customer application wishes to receive messages from the first customer application.

34. Radiocommunication module according to any one of claims 32 and 33, **characterised in that** said level 2 source function of initialising the secondary customer sub-application includes at least one parameter allowing a dialogue mechanism to be implemented between the main customer sub-application and the secondary customer sub-application.

35. Radiocommunication module according to any one of claims 32 to 34, **characterised in that** the set of level 2 source functions associated with the secondary customer sub-application includes a level 2 source function of stopping the secondary customer sub-application, which is called upon by the main customer sub-application.

36. Radiocommunication module according to any one of claims 32 to 35, **characterised in that** the set of level 2 source functions associated with the secondary customer sub-application includes a level 2 source function of unsubscribing from said service of sending messages from the first customer application.

37. Process of opening up access to at least some of the functionalities of a main software program of a radiocommunication module providing radiocommunication functions and intended to be :
- integrated in a radiotelephone terminal, or
- integrated in a device requiring a wireless communication functionnality or,
- proposed in an independent form, as a modem, which can cooperate with a third party equipment, said radiocommunication module being of the type that hosts and runs a main software program including:
- an operating system management application (OS),
- a radio communication management application (layer 3 GSM),
- an application for managing peripheral devices that can be connected to the radio communication module (HWL),
**characterised in that** each of said applications included in the main software program is associated with a set of level I executive functions,
**in that** said radio communication module additionally hosts and runs at least one customer software program including at least one customer application, associated with a set of level 1 source functions,
and **in that** said main software program and/or said customer software program include(s) a level I interface application, allowing level I source functions, associated with said customer application, to interface with level 1 executive functions, associated with said operating system management application and with at least one of said radio communication management and peripheral device management applications.
